(19) Europäisches Patentamt
European Patent Office
Office européen des brevets

(11) **EP 3 540 999 B1**

(12) **EUROPEAN PATENT SPECIFICATION**

(45) Date of publication and mention
of the grant of the patent:
**05.08.2020  Bulletin 2020/32**

(51) Int Cl.:
**H04L 1/18** (2006.01)

(21) Application number: **19159263.3**

(22) Date of filing: **26.02.2019**

(54) **METHOD AND APPARATUS FOR HANDLING TRANSMISSION DURING A RANDOM ACCESS PROCEDURE IN A WIRELESS COMMUNICATION SYSTEM**

VERFAHREN UND VORRICHTUNG ZUR HANDHABUNG DER ÜBERTRAGUNG WÄHREND EINER DIREKTZUGRIFFPROZEDUR IN EINEM DRAHTLOSKOMMUNIKATIONSSYSTEM

PROCÉDÉ ET APPAREIL POUR MANIPULER LA TRANSMISSION PENDANT UNE PROCÉDURE D'ACCÈS ALÉATOIRE DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2018  US 201862642305 P**
**22.03.2018  US 201862646607 P**

(43) Date of publication of application:
**18.09.2019  Bulletin 2019/38**

(73) Proprietor: **ASUSTek Computer Inc.**
**Taipei City 112 (TW)**

(72) Inventors:
• **KUNG, Yi-Hsuan**
**Taipei City 112 (TW)**
• **GUO, Yu-Hsuan**
**Taipei City 112 (TW)**
• **KUO, Richard Lee-Chee**
**Taipei City 112 (TW)**

(74) Representative: **Hoefer & Partner Patentanwälte mbB**
**Pilgersheimer Straße 20**
**81543 München (DE)**

(56) References cited:
**US-A1- 2010 322 172**

• **ERICSSON: "Collision of TTI bundle and Msg3", 3GPP DRAFT; R2-133427 COLLISION OF TTI BUNDLE AND MSG3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 28 September 2013 (2013-09-28), XP050719181, Retrieved from the Internet: URL:http://www.3gpp.org/ftp/tsg_ran/WG2_RL 2/TSGR2_83bis/Docs/ [retrieved on 2013-09-28]**

**Description**

This disclosure generally relates to wireless communication networks, and more particularly, to a method and apparatus for handling transmission during a random access procedure in a wireless communication system. Corresponding methods and apparatus are described in US 2010/322172 A1 and 3GPP document R2-133427.

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure is an Evolved Universal Terrestrial Radio Access Network (E-UTRAN). The E-UTRAN system can provide high data throughput in order to realize the above-noted voice over IP and multimedia services. A new radio technology for the next generation (e.g., 5G) is currently being discussed by the 3GPP standards organization. Accordingly, changes to the current body of 3GPP standard are currently being submitted and considered to evolve and finalize the 3GPP standard.

SUMMARY

Methods and apparatuses for handling transmissions during a random access procedure in a wireless communication system are disclosed herein and are defined in the independent claims. This invention is defined and limited by the scope of the appended independent claims. The dependent claims define preferred embodiments thereof. Embodiments that do not fall under the scope of the claims are to be considered as examples helpful to understand the invention.

BRIEF DESCRIPTION OF THE DRAWINGS

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 illustrates an example of configured grant between random access response and Msg3 transmission.

FIG. 6 illustrates an example of a configured grant between Msg3 transmission and Msg3 retransmission.

FIG. 7 illustrates an example of a configured grant between Msg3 transmission and Msg3 retransmission.

FIG. 8 illustrates an example of a configured grant between two Msg3 retransmissions.

FIG. 9 illustrates an example of UE receiving an uplink grant after transmitting Msg3.

FIG. 10 illustrates an example of a UE configured with a configured grant performs a random access procedure.

FIG. 11 illustrates an example of a UE configured with a configured grant performs a random access procedure.

FIG. 12 illustrates an example of a UE with a configured grant receives an uplink grant when performing a random access procedure.

FIG. 13 illustrates an example of a MAC PDU transmitted via a configured grant/dynamic grant that will be overwritten by MAC PDU for Msg3.

FIG. 14 illustrates an example of a Msg3 that will be overwritten by MAC PDU transmitted via a configured/dynamic grant.

FIG. 15 illustrates an exemplary embodiment in which a configured/dynamic grant associated with a HARQ process with a process ID 0 is not used.

FIG. 16 illustrates an exemplary embodiment in which a UE does not use a configured grant for a HARQ process 0.

FIG. 17 illustrates an exemplary embodiment in which a UE uses a configured grant for a transmission during a random access procedure.

FIG. 18 illustrates an exemplary embodiment in which a UE restarts *configuredGrantTimer* when receiving a random access response.

FIG. 19 illustrates an exemplary embodiment in which a UE starts *configuredGrantTimer* when transmitting Msg3.

FIG. 20 illustrates an exemplary embodiment in which a UE restarts *configuredGrantTimer* when receiving a PDCCH for a TC-RNTI.

FIG. 21 illustrates an exemplary embodiment in which a UE starts or restarts *configuredGrantTimer* when retransmitting Msg3.

FIG. 22 illustrates an exemplary embodiment in which a UE obtains a MAC PDU from the Msg3 buffer for Msg3 retransmission.

FIG. 23 is a flow diagram for one exemplary embodiment from the perspective of a User Equipment (UE).

## DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, 3GPP NR (New Radio) wireless access for 5G, or some other modulation techniques.

In particular, the exemplary wireless communication systems devices described below may be designed to support one or more standards such as the standard offered by a consortium named "3rd Generation Partnership Project" referred to herein as 3GPP, including: R2-1803854, 3GPP TS 38.321, "Medium Access Control (MAC) protocol specification"; R2-1801701, "RAN2 #100 meeting report"; R2-1801702, "Report of 3GPP TSGRAN2#AH-1801 meeting"; and TS 38.300 V15.0.0, "Overall description".

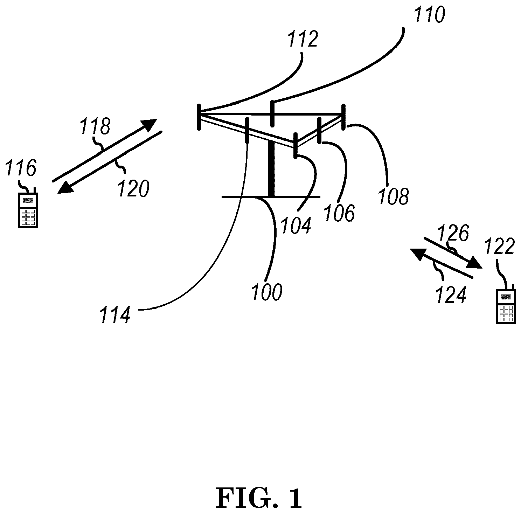

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

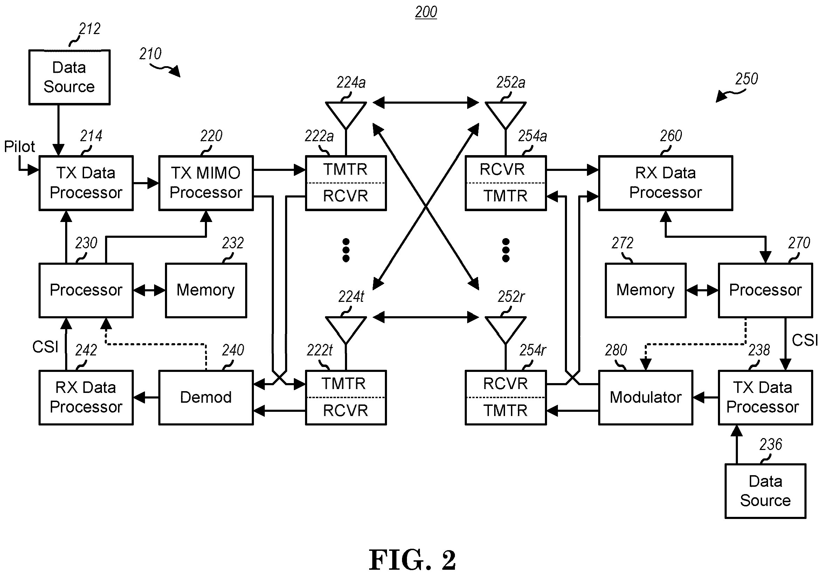

FIG. 2 is a simplified block diagram of an embodiment of a transmitter system 210 (also known as the access network) and a receiver system 250 (also known as access terminal (AT) or user equipment (UE) in a MIMO system 200. At the transmitter system 210, traffic data for a number of data streams is provided from a data source 212 to a transmit (TX) data processor 214.

Preferably, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and down converts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

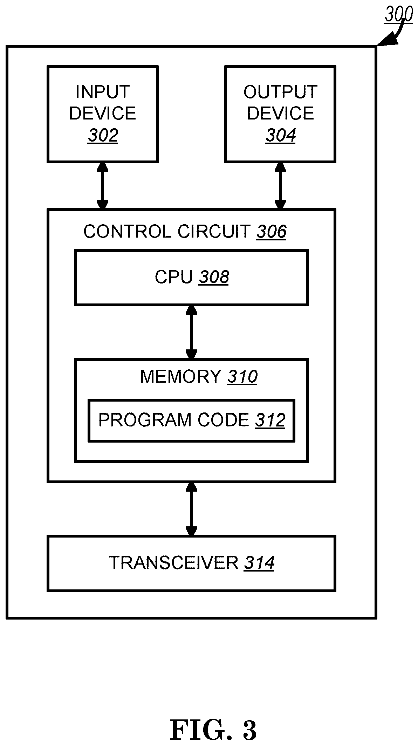

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1 or the base station (or AN) 100 in FIG. 1, and the wireless communications system is preferably the LTE system or the NR system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

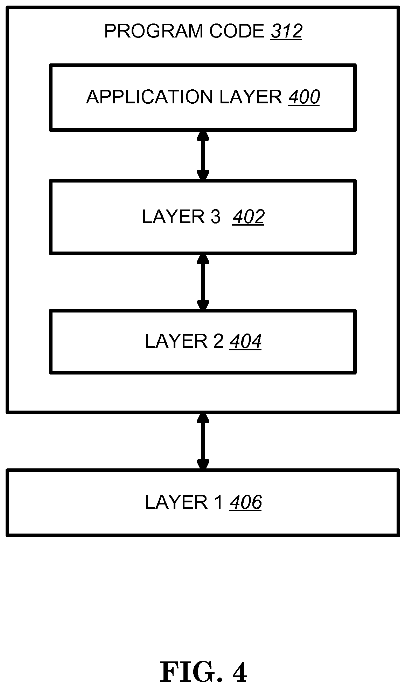

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

As disclosed in 3GPP R2-1801701, RAN2 meeting #100, the *configuredGrantTimer* was introduced:

18. From RAN2 perspective, a timer T is introduced. While the timer is running the UE does not use the SPS or Type 1 resource for new transmission for this HARQ process (e.g. UE assumes ACK if the timer is not running).
19. T is configured by RRC and it can be stopped when a dynamic grant is received for this HARQ process.

As disclosed in 3GPP R2-1801702, RAN2 meeting #AH-1801, it was agreed that the configuredGrantTimer be restarted when a dynamic grant is received:
=> The configuredGrantTimer is restarted when a dynamic grant is received for CS-RNTI/C-RNTI for a (re-)transmission for this HARQ process. For both Type 1 and Type 2. The timer is re-started upon PUSCH transmission.
As disclosed in 3GPP TS 38.300 V15.0.0, random access procedure is introduced as quoted below:

### 9.2.6 Random Access Procedure

The random access procedure is triggered by a number of events, for instance:

- Initial access from RRC_IDLE;

- RRC Connection Re-establishment procedure;

- Handover;

- DL or UL data arrival during RRC_CONNECTED when UL synchronisation status is "non-synchronised";

- Transition from RRC_INACTIVE;

- Request for Other SI (see subclause 7.3).

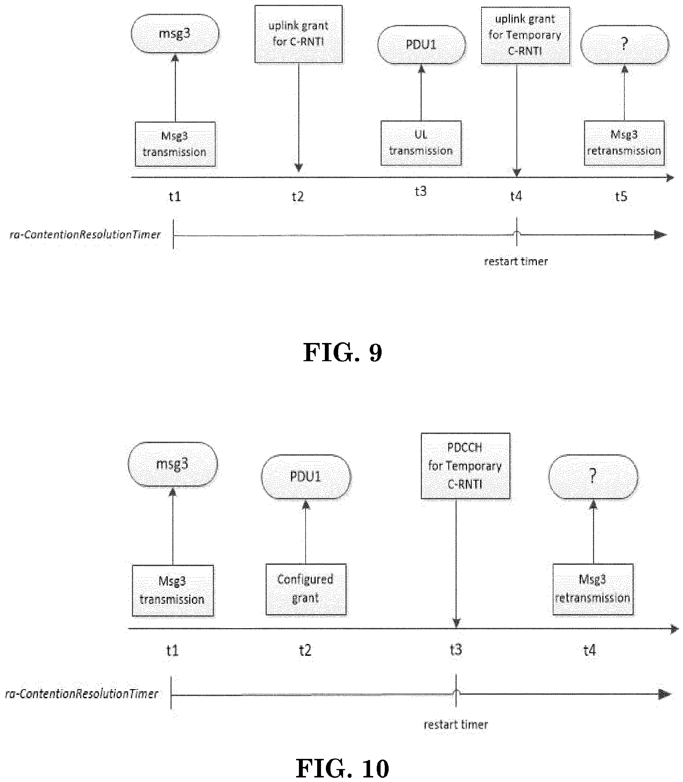

Furthermore, the random access procedure takes two distinct forms: contention based and non-contention based as shown on Figure 9.2.6-1 below. Normal DL/UL transmission can take place after the random access procedure. For initial access in a cell configured with SUL, the UE selects the SUL carrier if and only if the measured quality of the DL is lower than a broadcast threshold. Once started, all uplink transmissions of the random access procedure remain on the selected carrier.
As disclosed in 3GPP TS 38.321, R2-1803854, random access procedure is introduced as quoted below:

### 5.1 Random Access procedure

### 5.1.1 Random Access procedure initialization

The Random Access procedure described in this subclause is initiated by a PDCCH order, by the MAC entity itself, or by RRC for the events in accordance with TS 38.300 [2]. There is only one Random Access procedure ongoing at any point in time in a MAC entity. The Random Access procedure on an SCell other than PSCell shall only be initiated by a PDCCH order with *ra-PreambleIndex* different from 0b000000.
NOTE 1: If the MAC entity receives a request for a new Random Access procedure while another is already ongoing in the MAC entity, it is up to UE implementation whether to continue with the ongoing procedure or start with the new procedure (e.g. for SI request).
...
1> perform the Random Access Resource selection procedure (see subclause 5.1.2).

### 5.1.2 Random Access Resource selection

The MAC entity shall:
...
1> perform the Random Access Preamble transmission procedure (see subclause 5.1.3).

### 5.1.3 Random Access Preamble transmission

The MAC entity shall, for each Random Access Preamble:

1> if *PREAMBLE_TRANSMISSION_COUNTER* is greater than one; and

1> if the notification of suspending power ramping counter has not been received from lower layers; and

1> if SSB selected is not changed (i.e. same as the previous Random Access Preamble transmission):
2> increment *PREAMBLE_POWER_RAMPING_COUNTER* by 1.

1> set *PREAMBLE_RECEIVED_TARGET_POWER* to *preambleReceivedTargetPower* + *DELTA_PREAMBLE* + (*PREAMBLE_POWER_RAMPING_COUNTER* - 1) $\times$ *preamblePowerRampingStep*;

1> except for contention-free Random Access Preamble for beam failure recovery request, compute the RA-RNTI associated with the PRACH occasion in which the Random Access Preamble is transmitted;

1> instruct the physical layer to transmit the Random Access Preamble using the selected PRACH, corresponding RA-RNTI (if available), *PREAMBLE_INDEX* and *PREAMBLE_RECEIVED_TARGET_POWER*.

### 5.1.4 Random Access Response reception

Once the Random Access Preamble is transmitted and regardless of the possible occurrence of a measurement gap, the MAC entity shall:

1> if the contention-free Random Access Preamble for beam failure recovery request was transmitted by the MAC entity:

2> start the *ra-ResponseWindow* configured in *BeamFailureRecoveryConfig* at the first PDCCH occasion as specified in TS 38.213 [6] from the end of the Random Access Preamble transmission;

2> monitor the PDCCH of the SpCell for response to beam failure recovery request identified by the C-RNTI while *ra-ResponseWindow* is running.

1> else:

2> start the *ra-ResponseWindow* configured in *RACH-ConfigCommon* at the first PDCCH occasion as specified in TS 38.213 [6] from the end of the Random Access Preamble transmission;
2> monitor the PDCCH of the SpCell for Random Access Response(s) identified by the RA-RNTI while the *ra-ResponseWindow* is running.

1> if notification of a reception of a PDCCH transmission is received from lower layers; and

1> if PDCCH transmission is addressed to the C-RNTI; and

1> if the contention-free Random Access Preamble for beam failure recovery request was transmitted by the MAC entity:
2> consider the Random Access procedure successfully completed.

1> else if a downlink assignment has been received on the PDCCH for the RA-RNTI and the received TB is successfully decoded:

2> if the Random Access Response contains a Backoff Indicator subheader:
3> set the *PREAMBLE_BACKOFF* to value of the BI field of the Backoff Indicator subheader using Table 7.2-1.

2> else:
3> set the *PREAMBLE_BACKOFF* to 0 ms.

2> if the Random Access Response contains a Random Access Preamble identifier corresponding to the transmitted *PREAMBLE_INDEX* (see subclause 5.1.3):
3> consider this Random Access Response reception successful.

2> if the Random Access Response reception is considered successful:

    3> if the Random Access Response includes RAPID only:

        4> consider this Random Access procedure successfully completed;

        4> indicate the reception of an acknowledgement for the SI request to upper layers.

    3> else:

        4> apply the following actions for the Serving Cell where the Random Access Preamble was transmitted:

            5> process the received Timing Advance Command (see subclause 5.2);

            5> indicate the *preambleReceivedTargetPower* and the amount of power ramping applied to the latest Random Access Preamble transmission to lower layers (i.e. (*PREAMBLE_POWER_RAMPING_COUNTER* - 1) $\times$ *preamblePowerRampingStep*).

            5> if the Serving Cell for the Random Access procedure is SRS-only SCell:
                6> ignore the received UL grant.

            5> else:
                6> process the received UL grant value and indicate it to the lower layers.

        4> if the Random Access Preamble was not selected by the MAC entity among the contention-based Random Access Preamble(s):
        5> consider the Random Access procedure successfully completed.

        4> else:

            5> set the *TEMPORARY_C-RNTI* to the value received in the Random Access Response;

            5> if this is the first successfully received Random Access Response within this Random Access procedure:

                6> if the transmission is not being made for the CCCH logical channel:
                    7> indicate to the Multiplexing and assembly entity to include a C-RNTI MAC CE in the subsequent uplink transmission.

                6> obtain the MAC PDU to transmit from the Multiplexing and assembly entity and store it in the Msg3 buffer.

### 5.1.5 Contention Resolution

Contention Resolution is based on either C-RNTI on PDCCH of the SpCell or UE Contention Resolution Identity on DL-SCH.
Once Msg3 is transmitted, the MAC entity shall:

1> start the *ra-ContentionResolutionTimer* and restart the *ra-ContentionResolutionTimer* at each HARQ retransmission;

1> monitor the PDCCH while the *ra-ContentionResolutionTimer* is running regardless of the possible occurrence of a measurement gap;

1> if notification of a reception of a PDCCH transmission is received from lower layers:

    2> if the C-RNTI MAC CE was included in Msg3:

> 3> if the Random Access procedure was initiated by the MAC sublayer itself or by the RRC sublayer and the PDCCH transmission is addressed to the C-RNTI and contains a UL grant for a new transmission; or

> 3> if the Random Access procedure was initiated by a PDCCH order and the PDCCH transmission is addressed to the C-RNTI; or

> 3> if the Random Access procedure was initiated for beam failure recovery (as specified in subclause 5.17) and the PDCCH transmission is addressed to the C-RNTI:

>> 4> consider this Contention Resolution successful;

>> 4> stop *ra-ContentionResolutionTimer*;

>> 4> discard the *TEMPORARY_C-RNTI,*

>> 4> consider this Random Access procedure successfully completed.

> 2> else if the CCCH SDU was included in Msg3 and the PDCCH transmission is addressed to its *TEMPORARY_C-RNTI:*
>> 3> if the MAC PDU is successfully decoded:

>> 4> stop *ra-ContentionResolutionTimer*;

>> 4> if the MAC PDU contains a UE Contention Resolution Identity MAC CE; and

>> 4> if the UE Contention Resolution Identity in the MAC CE matches the CCCH SDU transmitted in Msg3:

>>> 5> consider this Contention Resolution successful and finish the disassembly and demultiplexing of the MAC PDU;

>>> 5> set the C-RNTI to the value of the *TEMPORARY_C-RNTI*;

>>> 5> discard the *TEMPORARY_C-RNTI;*

>>> 5> consider this Random Access procedure successfully completed.

>> 4> else

>>> 5> discard the *TEMPORARY_C-RNTI*;

>>> 5> consider this Contention Resolution not successful and discard the successfully decoded MAC PDU.

> 1> if *ra-ContentionResolutionTimer* expires:

> 2> discard the *TEMPORARY_C-RNTI*;

> 2> consider the Contention Resolution not successful.

As disclosed in 3GPP TS 38.321, R2-1803854, Uplink Shared Channel (UL-SCH) data transfer is introduced as quoted below:

**5.4 UL-SCH data transfer**

**5.4.1 UL Grant reception**

Uplink grant is either received dynamically on the PDCCH, in a Random Access Response, or configured semi-persistently by RRC. The MAC entity shall have an uplink grant to transmit on the UL-SCH. To perform the requested transmissions, the MAC layer receives HARQ information from lower layers.

If the MAC entity has a C-RNTI, a Temporary C-RNTI, or CS-RNTI, the MAC entity shall for each PDCCH occasion and for each Serving Cell belonging to a TAG that has a running *timeAlignmentTimer* and for each grant received for this PDCCH occasion:

1> if an uplink grant for this Serving Cell has been received on the PDCCH for the MAC entity's C-RNTI or Temporary C-RNTI; or

1> if an uplink grant has been received in a Random Access Response:

2> if the uplink grant is for MAC entity's C-RNTI and if the previous uplink grant delivered to the HARQ entity for the same HARQ process was either an uplink grant received for the MAC entity's CS-RNTI or a configured uplink grant:
3> consider the NDI to have been toggled for the corresponding HARQ process regardless of the value of the NDI.

2> if the uplink grant is for MAC entity's C-RNTI, and the identified HARQ process is configured for a configured grant:
3> start or restart the *configuredGrantTimer* for the correponding HARQ process, if configured.

2> deliver the uplink grant and the associated HARQ information to the HARQ entity.

1> else if an uplink grant for this PDCCH occasion has been received for this Serving Cell on the PDCCH for the MAC entity's CS-RNTI:

2> if the NDI in the received HARQ information is 1:

3> consider the NDI for the corresponding HARQ process not to have been toggled;

3> start or restart the *configuredGrantTimer* for the corresponding HARQ process, if configured;

3> deliver the uplink grant and the associated HARQ information to the HARQ entity.

2> else if the NDI in the received HARQ information is 0:

3> if PDCCH contents indicate configured grant Type 2 deactivation:
4> trigger configured grant confirmation.

3> else if PDCCH contents indicate configured grant Type 2 activation:

4> trigger configured grant confirmation;

4> store the uplink grant for this Serving Cell and the associated HARQ information as configured uplink grant;

4> initialise or re-initialise the configured uplink grant for this Serving Cell to start in the associated PUSCH duration and to recur according to rules in subclause 5.8.2;

4> set the HARQ Process ID to the HARQ Process ID associated with this PUSCH duration;

4> consider the NDI bit for the corresponding HARQ process to have been toggled;

4> stop the *configuredGrantTimer* for the corresponding HARQ process, if running;

4> deliver the configured uplink grant and the associated HARQ information to the HARQ entity.

For each Serving Cell and each configured uplink grant, if configured and activated, the MAC entity shall:
1> if the PUSCH duration of the configured uplink grant does not overlap with the PUSCH duration of an uplink grant received on the PDCCH for this Serving Cell:

2> set the HARQ Process ID to the HARQ Process ID associated with this PUSCH duration;

2> if the *configuredGrantTimer* for the corresponding HARQ process is not running:

3> consider the NDI bit for the corresponding HARQ process to have been toggled;

3> deliver the configured uplink grant and the associated HARQ information to the HARQ entity.

For configured uplink grants, the HARQ Process ID associated with the first symbol of a UL transmission is derived from the following equation:

$$\text{HARQ Process ID} = [\text{floor}(\text{CURRENT\_symbol}/periodicity)] \text{ modulo } nrofHARQ\text{-}Processes$$

where CURRENT_symbol=(SFN $\times$ *numberOfSlotsPerFrame* $\times$ *numberOfSymbolsPerSlot* + slot number in the frame $\times$ *numberOfSymbolsPerSlot* + symbol number in the slot), and *numberOfSlotsPerFrame* and *numberOfSymbolsPerSlot* refer to the number of consecutive slots per frame and the number of consecutive symbols per slot, respectively as specified in TS 38.211 [8].

NOTE 1: CURRENT_symbol refers to the symbol index of the first transmission occasion of a repetition bundle that takes place.

NOTE 2: A HARQ process is configured for a configured grant if the configured grant is activated and the associated HARQ process ID is less than *nrofHARQ-Processes.*

### 5.4.2 HARQ operation

5.4.2.1 HARQ Entity

The MAC entity includes a HARQ entity for each Serving Cell with configured uplink (including the case when it is configured with *supplementaryUplink*), which maintains a number of parallel HARQ processes.
The number of parallel UL HARQ processes per HARQ entity is specified in TS 38.214 [7].
Each HARQ process supports one TB.
Each HARQ process is associated with a HARQ process identifier. For UL transmission with UL grant in RA Response, HARQ process identifier 0 is used.
When the MAC entity is configured with *pusch-AggregationFactor* > 1, the parameter *pusch-AggregationFactor* provides the number of transmissions of a TB within a bundle of the dynamic grant. After the initial transmission, *pusch-AggregationFactor* - 1 HARQ retransmissions follow within a bundle. When the MAC entity is configured with *repK* > 1, the parameter *repK* provides the number of transmissions of a TB within a bundle of the configured grant. After the initial transmission, HARQ retransmissions follow within a bundle. For both dynamic grant and configured grant, bundling operation relies on the HARQ entity for invoking the same HARQ process for each transmission that is part of the same bundle. Within a bundle, HARQ retransmissions are triggered without waiting for feedback from previous transmission according to *pusch-AggregationFactor* for a dynamic grant and *repK* for a configured grant, respectively. Each transmission within a bundle is a separate uplink grant after the initial uplink grant within a bundle is delivered to the HARQ entity.
For each transmission within a bundle of the dynamic grant, the sequence of redundancy versions is determined according to subclause 6.1.4 of TS 38.214 [7]. For each transmission within a bundle of the configured grant, the sequence of redundancy versions is determined according to subclause 6.1.2.3 of TS 38.214 [7].
For each uplink grant, the HARQ entity shall:
1> identify the HARQ process associated with this grant, and for each identified HARQ process:

2> if the received grant was not addressed to a Temporary C-RNTI on PDCCH, and the NDI provided in the associated HARQ information has been toggled compared to the value in the previous transmission of this TB of this HARQ process; or

2> if the uplink grant was received on PDCCH for the C-RNTI and the HARQ buffer of the identified process is empty; or

2> if the uplink grant was received in a Random Access Response; or

2> if the uplink grant is part of a bundle of the configured grant, and may be used for initial transmission according to subclause 6.1.2.3 of TS 38.214 [7], and if no MAC PDU has been obtained for this bundle:

3> if there is a MAC PDU in the Msg3 buffer and the uplink grant was received in a Random Access Response:
4> obtain the MAC PDU to transmit from the Msg3 buffer.

3> else:
4> obtain the MAC PDU to transmit from the Multiplexing and assembly entity, if any;

3> if a MAC PDU to transmit has been obtained:

4> deliver the MAC PDU and the uplink grant and the HARQ information of the TB to the identified HARQ process;

4> instruct the identified HARQ process to trigger a new transmission;

4> if the uplink grant is addressed to CS-RNTI; or

4> if the uplink grant is a configured uplink grant; or

4> if the uplink grant is addressed to C-RNTI, and the identified HARQ process is configured for a configured grant:
5> start or restart the *configuredGrantTimer,* if configured, for the corresponding HARQ process when the transmission is performed.

2> else (i.e. retransmission):

3> if the uplink grant received on PDCCH was addressed to CS-RNTI and if the HARQ buffer of the identified process is empty; or

3> if the uplink grant is part of a bundle of the configured grant and if no MAC PDU has been obtained for this bundle:
4> ignore the uplink grant.

3> else:

4> deliver the uplink grant and the HARQ information (redundancy version) of the TB to the identified HARQ process;

4> instruct the identified HARQ process to trigger a retransmission;

4> if the uplink grant is addressed to CS-RNTI; or

4> if the uplink grant is addressed to C-RNTI, and the identified HARQ process is configured for a configured grant:
5> start or restart the *configuredGrantTimer,* if configured, for the corresponding HARQ process when the transmission is performed.

When determining if NDI has been toggled compared to the value in the previous transmission the MAC entity shall ignore NDI received in all uplink grants on PDCCH for its Temporary C-RNTI.

5.4.2.2 HARQ process

Each HARQ process is associated with a HARQ buffer.

New transmissions are performed on the resource and with the MCS indicated on either PDCCH, Random Access Response, or RRC. Retransmissions are performed on the resource and, if provided, with the MCS indicated on PDCCH, or on the same resource and with the same MCS as was used for last made transmission attempt within a bundle.

If the HARQ entity requests a new transmission for a TB, the HARQ process shall:

> 1> store the MAC PDU in the associated HARQ buffer;

> 1> store the uplink grant received from the HARQ entity;

> 1> generate a transmission as described below.

If the HARQ entity requests a retransmission for a TB, the HARQ process shall:

> 1> store the uplink grant received from the HARQ entity;

> 1> generate a transmission as described below.

To generate a transmission for a TB, the HARQ process shall:

> 1> if the MAC PDU was obtained from the Msg3 buffer; or

> 1> if there is no measurement gap at the time of the transmission and, in case of retransmission, the retransmission does not collide with a transmission for a MAC PDU obtained from the Msg3 buffer:
> 2> instruct the physical layer to generate a transmission according to the stored uplink grant.

3GPP TS 38.321, R2-1803854, introduces Logical channel (LCH) prioritization as quoted below:

5.4.3.1.1 General

The Logical Channel Prioritization procedure is applied whenever a new transmission is performed.
RRC controls the scheduling of uplink data by signalling for each logical channel per MAC entity:

- *priority* where an increasing priority value indicates a lower priority level;

- *prioritisedBitRate* which sets the Prioritized Bit Rate (PBR);

- *bucketSizeDuration* which sets the Bucket Size Duration (BSD).

RRC additionally controls the LCP procedure by configuring mapping restrictions for each logical channel:

- *allowedSCS-List* which sets the allowed Subcarrier Spacing(s) for transmission;

- *maxPUSCH-Duration* which sets the maximum PUSCH duration allowed for transmission;

- *configuredGrantTypeIAllowed* which sets whether a Configured Grant Type 1 can be used for transmission;

- *allowedServingCells* which sets the allowed cell(s) for transmission.

3GPP TS 38.321, R2-1803854, introduces how to trigger a Scheduling Request (SR) as quoted below:

**5.4.5 Buffer Status Reporting**

The MAC entity shall:
1> if the Buffer Status reporting procedure determines that at least one BSR has been triggered and not cancelled:

> 2> if UL-SCH resources are available for a new immediate transmission:

> > 3> instruct the Multiplexing and Assembly procedure to generate the BSR MAC CE(s);

> > 3> start or restart *periodicBSR-Timer* except when all the generated BSRs are long or short Truncated BSRs;

3> start or restart *retxBSR-Timer.*

2> if there is no UL-SCH resource available for a new transmission; or

2> if the UL-SCH resources available for a new transmission do not meet the LCP mapping restrictions (see subclause 5.4.3.1) configured for the LCH(s) that triggered the BSR(s):
3> if a Regular BSR has been triggered and *logicalChannelSR-DelayTimer* is not running:

4> if an uplink grant is not a configured grant; or

4> if the Regular BSR was not triggered for a logical channel for which logical channel SR masking (*logical-ChannelSR-Mask*) is setup by upper layers:
5> trigger a Scheduling Request.

Basically, if a Regular BSR was triggered for a logical channel for which logical channel SR masking (*logical-ChannelSR-Mask*) is setup by upper layers, there is no need to trigger SR because the concerned logical channel is intended for using a configured grant.
3GPP TS 38.321, R2-1803854, introduces transmissions without dynamic grant as quoted below:

**5.8 Transmission and reception without dynamic scheduling**

**5.8.2 Uplink**

There are two types of transmission without dynamic grant:

- configured grant Type 1 where an uplink grant is provided by RRC, and stored as configured uplink grant;

- configured grant Type 2 where an uplink grant is provided by PDCCH, and stored or cleared as configured uplink grant based on L1 signalling indicating configured grant activation or deactivation.

Type 1 and Type 2 are configured by RRC per Serving Cell and per BWP. Multiple configurations can be active simultaneously only on different Serving Cells. For Type 2, activation and deactivation are independent among the Serving Cells. For the same Serving Cell, the MAC entity is configured with either Type 1 or Type 2.
RRC configures the following parameters when the configured grant Type 1 is configured:

- *cs-RNTI*: CS-RNTI for retransmission;

- *periodicity:* periodicity of the configured grant Type 1;

- *timeDomainOffset*: Offset of a resource with respect to SFN=0 in time domain;

- *timeDomainAllocation*: Allocation of configured grant in time domain which contains *startSymbolAndLength* (i.e. *SLIV* in TS 38.214 [7]);

- *nrofHARQ-Processes*: the number of HARQ processes.

RRC configures the following parameters when the configured grant Type 2 is configured:

- *cs-RNTI*: CS-RNTI for both activation, deactivation, and retransmission;

- *periodicity*: periodicity of the configured grant Type 2;

- *nrofHARQ-Processes*: the number of HARQ processes.

Upon configuration of a configured grant Type 1 for a Serving Cell by upper layers, the MAC entity shall:

1> store the uplink grant provided by upper layers as a configured uplink grant for the indicated Serving Cell;

1> initialise or re-initialise the configured uplink grant to start in the symbol according to *timeDomainOffset* and S (derived from *SLIV as* specified in TS 38.214 [7]), and to reoccur with *periodicity.*

After an uplink grant is configured for a configured grant Type 1, the MAC entity shall consider sequentially that the $N^{th}$ uplink grant occurs associated with the symbol for which:

$$[(SFN \times numberOfSlotsPerFrame \times numberOfSymbolsPerSlot) + (\text{slot number in the frame} \times numberOfSymbolsPerSlot) + \text{symbol number in the slot}] = (timeDomainOffset \times numberOfSymbolsPerSlot + S + N \times periodicity) \text{ modulo } (1024 \times numberOfSlotsPerFrame \times numberOfSymbolsPerSlot)$$

After an uplink grant is configured for a configured grant Type 2, the MAC entity shall consider sequentially that the $N^{th}$ uplink grant occurs associated with the symbol for which:

$$[(SFN \times numberOfSlotsPerFrame \times numberOfSymbolsPerSlot) + (\text{slot number in the frame} \times numberOfSymbolsPerSlot) + \text{symbol number in the slot}] = [(SFN_{start\ time} \times numberOfSlotsPerFrame \times numberOfSymbolsPerSlot + slot_{start\ time} \times numberOfSymbolsPerSlot + symbol_{start\ time}) + N \times periodicity] \text{ modulo } (1024 \times numberOfSlotsPerFrame \times numberOfSymbolsPerSlot)$$

where $SFN_{start\ time}$, and $symbol_{start\ time}$ are the SFN, slot, and symbol, respectively, of the first transmission of PUSC where the configured uplink grant was (re-)initialised.

When a configured grant is released by upper layers, all the corresponding configurations shall be released and all corresponding uplink grants shall be cleared immediately.

The MAC entity shall:

1> if the configured grant confirmation has been triggered and not cancelled; and

1> if the MAC entity has UL resources allocated for new transmission:

2> instruct the Multiplexing and Assembly procedure to generate an Configured Grant Confirmation MAC CE as defined in subclause 6.1.3.7;

2> cancel the triggered configured grant confirmation.

For a configured grant Type 2, the MAC entity shall clear the configured uplink grant immediately after first transmission of Configured Grant Confirmation MAC CE triggered by the configured grant deactivation. Retransmissions except for repetition of configured grants use uplink grants addressed to CS-RNTI.

3GPP TS 38.321, R2-1803854, introduces a beam failure recovery procedure as quoted below:

**5.17 Beam Failure Detection and Recovery procedure**

The MAC entity may be configured by RRC with a beam failure recovery procedure which is used for indicating to the serving gNB of a new SSB or CSI-RS when beam failure is detected on the serving SSB(s)/CSI-RS(s). Beam failure is detected by counting beam failure instance indication from the lower layers to the MAC entity.

RRC configures the following parameters in the *BeamFailureRecoveryConfig* for the Beam Failure Detection and Recovery procedure:

- *beamFailureInstanceMaxCount* for the beam failure detection;

- *beamFailureDetectionTimer* for the beam failure detection;

- *beamFailureCandidateBeamThreshold*: an RSRP threshold for the beam failure recovery;

- *preamblePowerRampingStep*: *preamblePowerRampingStep* for the beam failure recovery;

- *preambleReceivedTargetPower*: *preambleReceivedTargetPower* for the beam failure recovery;

- *preambleTxMax*: *preambleTxMax* for the beam failure recovery;

- *ra-ResponseWindow*: the time window to monitor response(s) for the beam failure recovery using contention-free Random Access Preamble.

The following UE variables are used for the beam failure detection procedure:

- *BFI_COUNTER*: counter for beam failure instance indication which is initially set to 0.

The MAC entity shall:

1> if beam failure instance indication has been received from lower layers:

    2> start or restart the *beamFailureDetectionTimer*;

    2> increment *BFI_COUNTER* by 1;

    2> if *BFI_COUNTER* = *beamFailureInstanceMaxCount* + 1:
    3> initiate a Random Access procedure (see subclause 5.1) on the SpCell by applying the parameters configured in *BeamFailureRecoveryConfig.*

1> if the *beamFailureDetectionTimer* expires:
2> set *BFI_COUNTER* to 0.

1> if the Random Access procedure is successfully completed (see subclause 5.1):
2> consider the Beam Failure Recovery procedure successfully completed.

3GPP TS 38.300 V15.0.0 introduces URLLC services:

16.1 URLLC

16.1.1 Overview

The support of Ultra-Reliable and Low Latency Communications (URLLC) services is facilitated by the introduction of the mechanisms described in the following subclauses. Please note however that those mechanisms need not be limited to the provision of URLLC services.

16.1.2 LCP Restrictions

With LCP restrictions in MAC, RRC can restrict the mapping of a logical channel to a subset of the configured cells, numerologies, PUSCH transmission durations and control whether a logical channel can utilise the resources allocated by a Type 1 Configured Grant (see subclause 10.3). With such restrictions, it then becomes possible to reserve, for instance, the numerology with the largest subcarrier spacing and/or shortest PUSCH transmission duration for URLLC services.

In the current specification of 3GPP TS 38.321, R2-1803854, a UE could initiate a random access procedure (e.g. for beam failure recovery or for UL data arrival) while being configured with a configured grant (e.g. type 1 or type 2), e.g. in the same cell. Additionally, or alternatively, the UE could receive an uplink grant on the Physical Downlink Control Channel (PDCCH) (e.g., addressed to its Cell RNTI (C-RNTI) or Configured Scheduling RNTI (CS-RNTI)) for a cell when the UE is performing the random access procedure in the cell. The uplink grant or the configured grant could be associated with the HARQ process that is for a UL transmission with a UL grant in a Random Access (RA) Response (e.g., a HARQ process associated with HARQ process identifier 0).

For a HARQ process configured for a configured grant, the parameter *configuredGrantTimer* for the corresponding HARQ process would be started or restarted with the timing described in 3GPP TS 38.321, R2-1803854 as follows:

- When an uplink grant has been received on the PDCCH for the MAC entity's C-RNTI and the identified HARQ process is configured for a configured grant.
- When an uplink grant for this PDCCH occasion has been received on the PDCCH for the MAC entity's CS-RNTI and if the New Data Indicator (NDI) in the received HARQ information is 1.

- When the transmission corresponding to an uplink grant is performed if the uplink grant is addressed to the MAC entity's CS-RNTI or C-RNTI, and the identified HARQ process is configured for a configured grant.
- When the transmission corresponding to an uplink grant is performed if the uplink grant is a configured grant.

A UE could be performing a contention-based random access procedure when it is configured with a configured grant (e.g., a random access procedure is initiated for a beam failure recovery or for an uplink data arrival). A random access response with an uplink grant could be received after a preamble transmission, and the UE could perform an uplink transmission with the uplink grant in the random access response with the HARQ process associated with the HARQ process identifier 0.

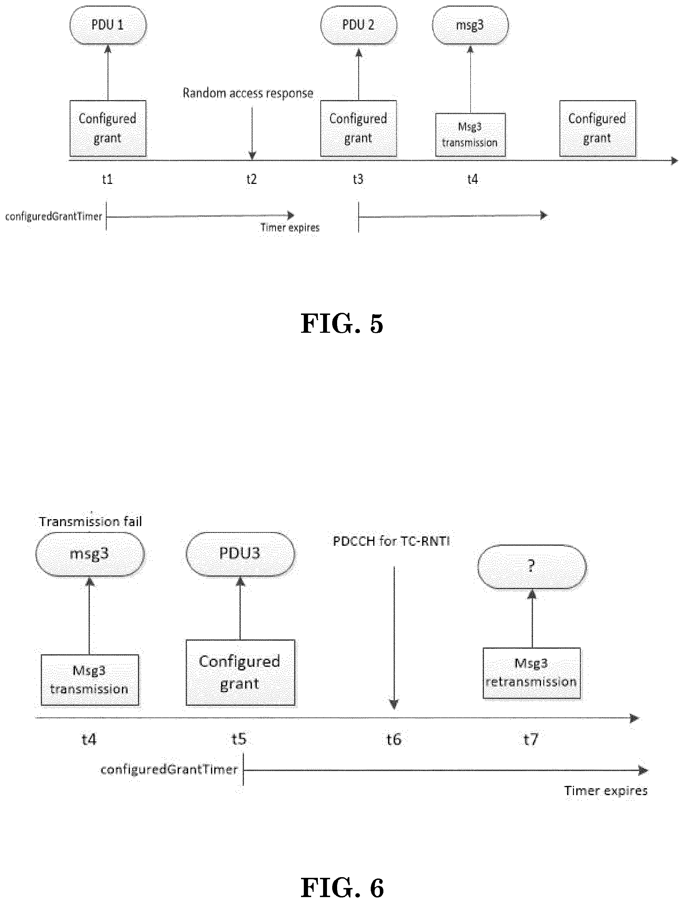

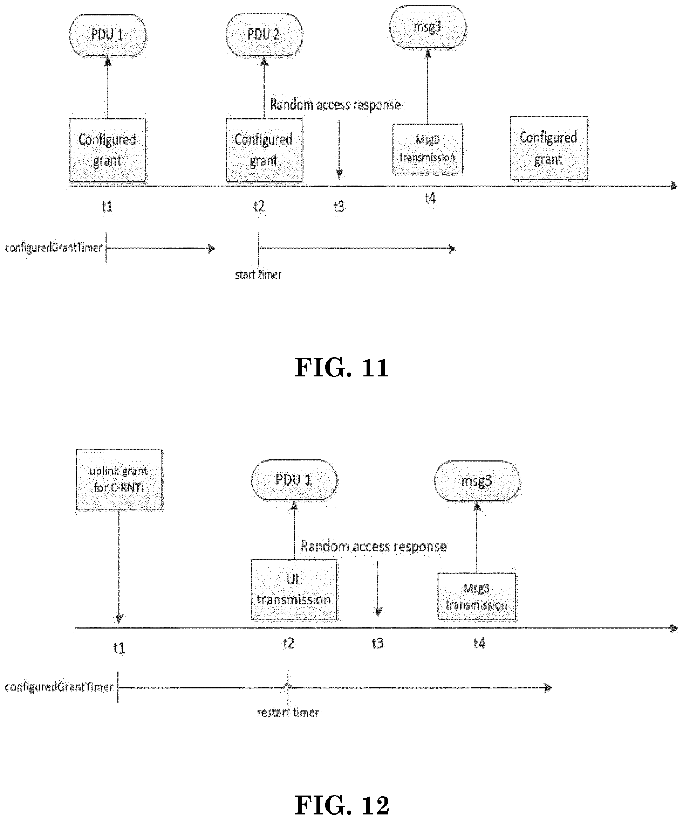

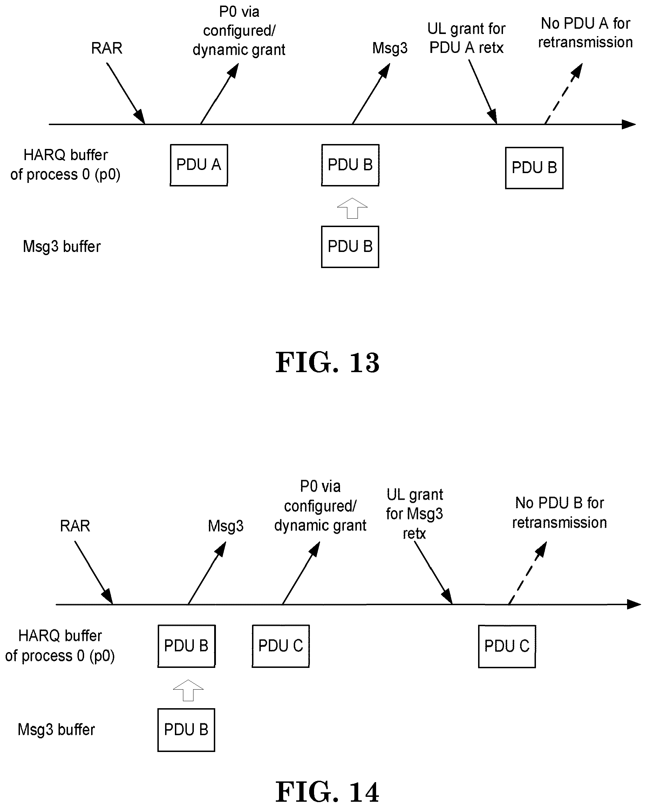

Since the *configuredGrantTimer* would not start nor restart in response to the reception of an uplink grant in a random access response, and if the HARQ process associated with HARQ process identifier 0 is configured for an uplink grant and there is a configured grant between the reception of the random access response and the uplink transmission is based on the uplink grant in the random access response, as shown in FIG. 5, the configured grant would be considered valid and a MAC PDU 2 would be stored in the associated HARQ buffer for the transmission. For an uplink transmission based on an uplink grant received in the random access response, a MAC PDU would be obtained from the Msg3 buffer and stored in the associated HARQ buffer. Therefore, the PDU obtained from the Msg3 buffer overwrites the MAC PDU 2 and the UE could not have sufficient opportunity to perform retransmission of the MAC PDU 2. A similar issue is shown in FIG. 11 with UE performing a configured grant transmission at t2 and receiving a random access response at t3. Another similar issue is shown in FIG. 13.

Another possible issue is shown in FIG. 6. When Msg3 is first transmitted in t4 and fails to be received by the gNB, the gNB would send an uplink grant addressed to a Temporary C-RNTI on the PDCCH for a Msg3 retransmission. If there is a configured grant between the Msg3 transmission and the reception of the uplink grant for the Msg3 retransmission, a MAC PDU (e.g., the MAC PDU 3 shown in FIG. 6) would be obtained and stored in the associated HARQ buffer, and the UE would transmit the MAC PDU 3 at time t5. When the UE tries to retransmit Msg3 at t7, the HARQ process would instruct the physical layer to generate a transmission according to the uplink grant addressed to the Temporary C-RNTI. However, the HARQ buffer is now stored with a MAC PDU 3 instead of Msg3, and the UE could wrongly transmit the MAC PDU 3 for a Msg3 retransmission or an error could occur if the size of the MAC PDU 3 is different from the uplink grant addressed to the Temporary C-RNTI. A similar issue is illustrated in FIG. 10 and FIG. 14.

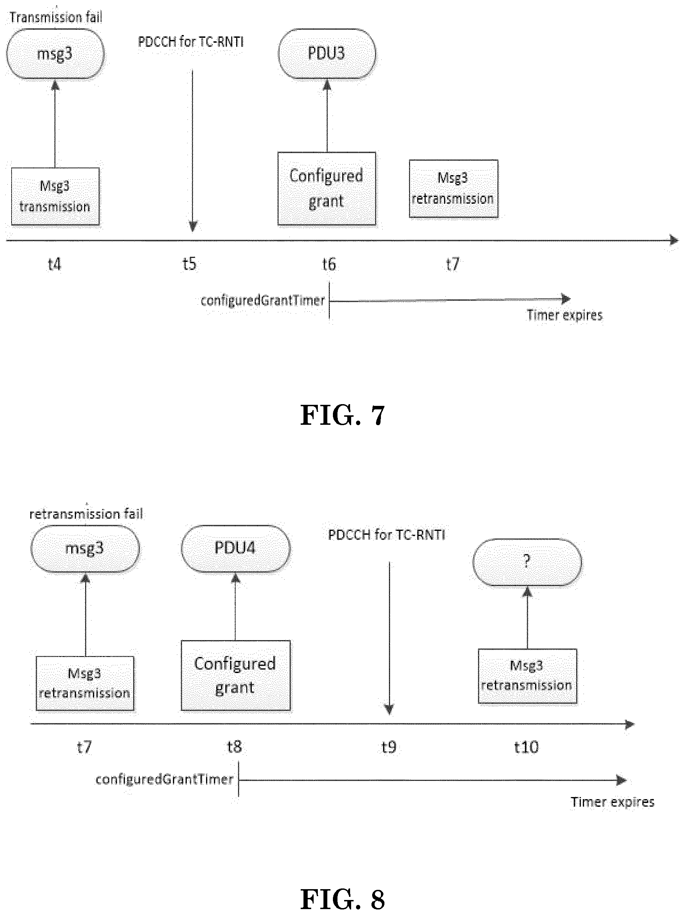

Another possible issue is shown in FIG. 7. When there is a configured grant between the reception of an uplink grant addressed to the TC-RNTI and an Msg3 retransmission according to the uplink grant, a MAC PDU (e.g., PDU 3 as shown in FIG. 7) would be generated and stored in the associated HARQ buffer. The MAC PDU 3, however, would have insufficient retransmission chance since the upcoming Msg3 retransmission could cause an error as mentioned above.

Another possible issue is shown in FIG. 8. When a Msg3 is retransmitted in t7 and fails to be received by the gNB, the gNB would send an uplink grant addressed to a Temporary C-RNTI on the PDCCH for the next Msg3 retransmission. If there is a configured grant between the reception of the uplink grant for the Msg3 retransmission and the next Msg3 retransmission, a MAC PDU (e.g., the MAC PDU 4 as shown in FIG. 8) would be obtained and stored in the associated HARQ buffer, and the UE would transmit the MAC PDU 4 at time t8. When the UE tries to retransmit Msg3 at t10, the HARQ process would instruct the physical layer to generate a transmission according to the uplink grant addressed to the Temporary C-RNTI. However, the HARQ buffer is now stored with the MAC PDU 4 instead of Msg3, and the UE could wrongly transmit MAC PDU 4 for Msg3 retransmission or an error could occur if the size of the MAC PDU 4 is different from the uplink grant addressed to Temporary C-RNTI. The MAC PDU 4 would have insufficient retransmission chance since the Msg3 retransmission could cause an error.

Another possible issue is shown in FIG. 9. After transmitting the Msg3 in a random access procedure at t1, a UE receives an uplink grant on the PDCCH at t2 for a new transmission and the uplink grant is associated with the HARQ process transmits the Msg3. The UE obtains a MAC PDU (e.g., PDU 1) to transmit from the multiplexing and assembly entity and stores the PDU 1 in the HARQ buffer associated with the HARQ process. After transmitting the PDU 1 at t3, the UE receives an uplink grant for the Msg3 retransmission at t4. Since the Msg3 in the HARQ buffer associated with the HARQ process is overwritten by PDU 1, an error could occur when the UE attempts to perform Msg3 retransmission at t5. A similar issue is illustrated in FIG. 14.

Another example of a possible issue is shown in FIG. 12. A UE configured with a configured grant performs a transmission (e.g., to transmit PDU 1) at t2 based on an uplink grant indicated at t1 with a HARQ process associated with the HARQ process identifier 0. The UE receives a random access response at t3 with an uplink grant indicating a Msg3 transmission at t4. The UE then stores the Msg3 in the HARQ buffer associated with the HARQ process 0. The PDU 1 in the HARQ buffer is overwritten by Msg3 and could not have sufficient retransmission chances. A similar issue is shown in FIG. 13.

When a UE is configured with a configured grant, a random access procedure could be initiated due to the data arrival of the logical channels (e.g., the logical channels for eMBB services) with priorities lower than the logical channels using the configured grant (e.g., the logical channels for URLLC services). It could be undesirable for the UE to overwrite the data stored in a HARQ buffer associated with the configured grant with a Msg3.

On the other hand, when a UE is configured with a configured grant, a random access procedure could be initiated due to the data arrival of the logical channels with priorities higher than the logical channels using the configured grant (or a random access procedure could be initiated for a beam failure recovery). It would be desirable for the UE to overwrite the data stored in a HARQ buffer associated with the configured grant with a Msg3.

To solve the above issue(s), one concept of the various embodiment disclosed herein is that during a random access procedure, a UE determines whether to use a HARQ process for a transmission via a configured grant (or a dynamic grant) based on whether the HARQ process is for a Msg3 transmission during the random access procedure. The UE could further consider:

- Configured grant type of the configured grant.
- Triggering event of the random access procedure.
- Logical channel priority of data to be transmitted.

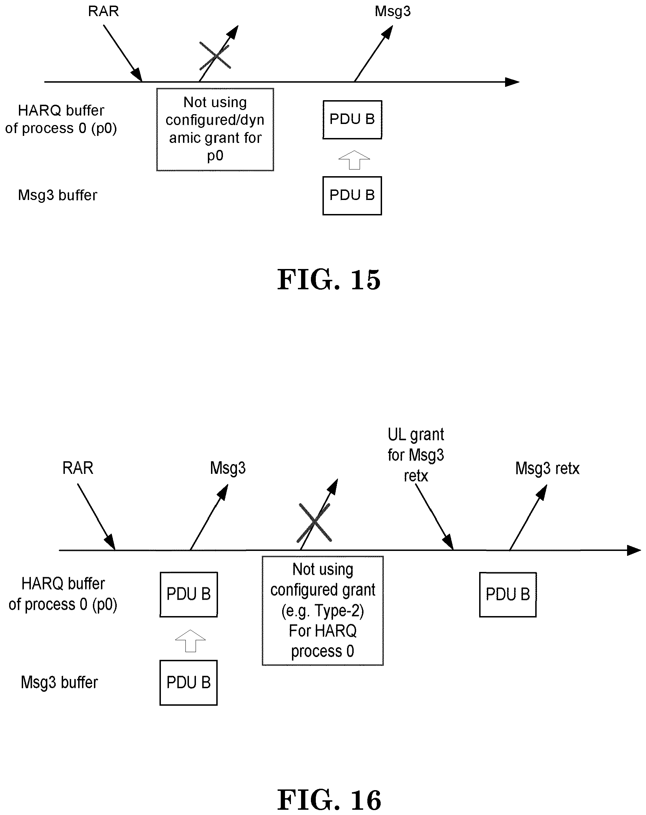

For example, as shown in FIG. 15, the UE could not use a HARQ process for a transmission via a configured grant (or a dynamic grant) when the HARQ process is for a Msg3 transmission during the random access procedure.

In another example, as shown in FIG. 16, the UE could not use a HARQ process for a transmission via a configured grant (e.g., a configured grant type-2) when the HARQ process is for a Msg3 transmission during the random access procedure.

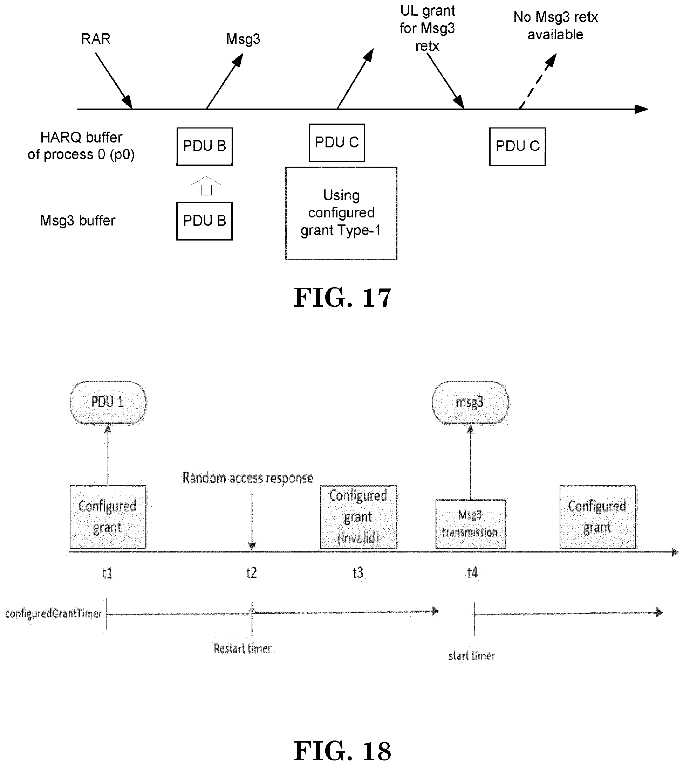

In another example, as shown in FIG. 17, the UE could use a HARQ process for a transmission via a configured grant (e.g., a configured grant type-1) when the HARQ process is for a Msg3 transmission during the random access procedure.

To solve the above issue(s), another concept of the disclosed embodiments is that a UE could not use a HARQ process (e.g., a HARQ process identifier 0) to perform an uplink transmission based on a configured grant if the HARQ process is used to perform a Msg3 transmission or retransmission during an ongoing random access procedure.

Preferably, the UE could determine whether to use the HARQ process to perform the uplink transmission based on status of a timer, e.g., *configuredGrantTimer.*

Preferably, the UE would start or restart *configuredGrantTimer* of an identified HARQ process when the UE receives (or in response to a reception of) a random access response with an uplink grant as shown in FIG. 18.

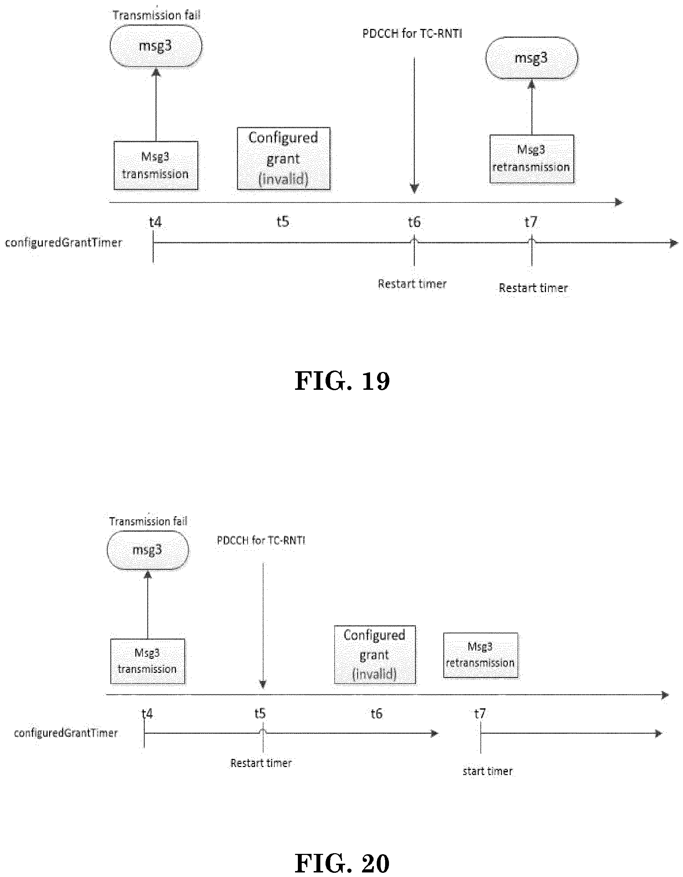

Additionally or alternatively preferably, the UE would start or restart *configuredGrantTimer* of an identified HARQ process when the UE performs (or in response to) a new transmission of Msg3 as shown in FIG. 19.

Additionally or alternatively preferably, a UE would start or restart *configuredGrantTimer* of an identified HARQ process when the UE receives (or in response to the reception of) an uplink grant (addressed to Temporary C-RNTI) for a Msg3 retransmission as shown in FIG. 20.

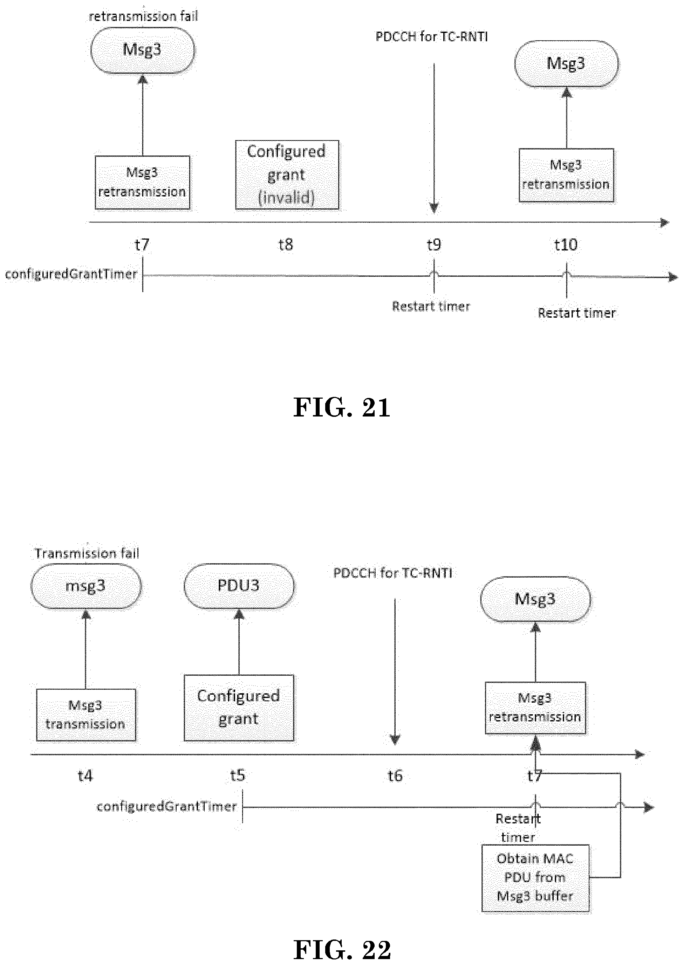

Additionally or alternatively preferably, a UE would start or restart *configuredGrantTimer* of an identified HARQ process when the UE retransmits (or in response to a retransmission of) a Msg3 as shown in FIG. 21.

Preferably, the identified HARQ process could be a HARQ process associated with the uplink grant.

Preferably, the identified HARQ process could be configured for a configured grant.

Preferably, the identified HARQ process could be used to perform a Msg3 transmission.

Preferably, the identified HARQ process could be associated with a HARQ process identifier 0.

Preferably, the UE could receive the random access response after a random access preamble transmission in a random access procedure.

Preferably, the random access procedure could be initiated for a beam failure recovery or be initiated for an uplink (UL) data arrival.

Preferably, the random access procedure could be a contention-based random access procedure.

Preferably, the UE could perform a Msg3 transmission after the random access response reception.

Preferably, the UE could receive an uplink grant on a PDCCH addressed to its Temporary C-RNTI after the Msg3 transmission for a first Msg3 retransmission.

Additionally or alternatively preferably, the UE could receive an uplink grant on PDCCH addressed to its Temporary C-RNTI after the first Msg3 retransmission for a second Msg3 retransmission.

Preferably, the UE could have a configured grant between the random access response reception and the Msg3 transmission.

Additionally or alternatively preferably, the UE could have a configured grant between the Msg3 transmission and reception of the uplink grant on the PDCCH addressed to its Temporary C-RNTI for the first Msg3 retransmission.

Additionally or alternatively preferably, the UE could have a configured grant between reception of the uplink grant on the PDCCH addressed to its Temporary C-RNTI for the first Msg3 retransmission and the first Msg3 retransmission.

Additionally or alternatively preferably, the UE could have a configured grant between the first Msg3 retransmission and reception of the uplink grant on the PDCCH addressed to its Temporary C-RNTI for the second Msg3 retransmission.

Additionally or alternatively preferably, the UE could be have a configured grant between reception the uplink grant on the PDCCH addressed to its Temporary C-RNTI for the second Msg3 retransmission and the second Msg3 retransmission.

Preferably, for each Serving Cell and each configured grant, the UE could not deliver the configured grant and the associated HARQ information if the *configuredGrantTimer* for the identified HARQ process is running.

Preferably, a serving cell could be a Primary Cell. Alternatively preferably, the serving cell could be a secondary cell.

Preferably, a configured grant could be configured grant Type1. Alternatively preferably, the serving cell could be a configured grant Type2.

Alternatively preferably, another approach to solve the above-mentioned issues is a UE could obtain a MAC PDU from a Msg3 buffer and store the MAC PDU in a HARQ buffer associated with a Msg3 retransmission before each Msg3 retransmission as shown in FIG. 22.

Additionally or alternatively preferably, a potential text proposal of the approach/concept for 3GPP TS 36.321 could be as follows: "if there is a MAC PDU in the Msg3 buffer and the uplink grant was received on PDCCH addressed to Temporary C-RNTI, a HARQ entity obtains the MAC PDU to transmit from the Msg3 buffer".

Preferably, the UE could perform a Msg3 retransmission in response to a reception of an uplink grant addressed to its Temporary C-RNTI.

Preferably, the uplink grant could be associated with a HARQ process identifier.

Preferably, the HARQ buffer could be associated with the HARQ process identifier.

Preferably, the MAC PDU from the Msg3 buffer could be obtained from the Multiplexing and assembly entity after a first successful reception of a random access response within a random access procedure.

Preferably, the random access procedure could be initiated for a beam failure recovery or be initiated for an UL data arrival.

Preferably, the random access procedure could be a contention-based random access procedure.

Another concept to solve the above-mentioned issues is that a UE could determine whether to use a HARQ process to perform a transmission (in a Serving Cell) associated with an uplink grant addressed to the UE's C-RNTI during an ongoing random access procedure based on whether the HARQ process has been used to perform a Msg3 transmission or retransmission during the ongoing random access procedure (in the Serving Cell).

Additionally or alternatively preferably, the UE could determine whether to use a HARQ process to perform a transmission associated with a configured grant during an ongoing random access procedure based on whether the HARQ process has been used to perform a Msg3 transmission or retransmission during the ongoing random access procedure.

Additionally or alternatively preferably, the UE could further determine whether to use a HARQ procession to perform a transmission based on the configured grant type of the configured grant.

Additionally or alternatively preferably, the UE could further determine whether to use a HARQ procession to perform a transmission based on the triggering event of the random access procedure.

Additionally or alternatively preferably, the UE could further determine whether to use a HARQ procession to perform a transmission based on the parameter(s) of the logical channels.

Preferably, the parameter(s) could include *priority.*

Preferably, the parameter(s) could include *configuredGrantTypeIAllowed.*

Additionally or alternatively preferably, a potential text proposal of the approach/concept for 3GPP TS 36.321 could be as follows: "if an associated HARQ process is not configured for configured grant Type 1 or if the associated HARQ process is configured for configured grant Type 1 and the *configuredGrantType1* of LCH providing a MAC PDU in a Msg3 buffer is present, a HARQ entity obtains the MAC PDU to transmit from the Msg3 buffer".

Preferably, the parameter(s) could include *logicalChannelSR-Mask.*

Preferably, *logicalChannelSR-Mask* indicates whether the Scheduling Request (SR) masking is configured for a logical channel and whether it is configured by a Radio Resource Control (RRC).

Preferably, the ongoing random access procedure is performed on a Serving Cell configured with the configured grant.

Preferably, the UE could determine whether to use the HARQ process to perform the transmission associated with the uplink grant addressed to the UE's C-RNTI based on the status of a timer, e.g. *ra-ContentionResolutionTimer.*

Additionally or alternatively preferably, the UE determines whether to use the HARQ process to perform the transmission associated with the configured grant based on the status of the timer, e.g. *ra-ContentionResolutionTimer.*

Preferably, the UE would not (or is not allowed to) use the HARQ process to perform the transmission associated with the uplink grant addressed to the UE's C-RNTI if the timer is running.

Preferably, the UE could use the HARQ process to perform the transmission associated with the uplink grant addressed to the UE's C-RNTI if the timer is not running.

Additionally or alternatively preferably, the UE does not (or is not allowed to) use the HARQ process to perform the transmission associated with the configured grant if the timer is running.

Additionally or alternatively preferably, the UE could use the HARQ process to perform the transmission associated with the configured grant if the timer is not running.

Additionally or alternatively preferably, the UE could use the HARQ process to perform the uplink transmission based on the configured grant if the configured grant type is Type 1.

Additionally or alternatively preferably, the UE would not use the HARQ process to perform the uplink transmission based on the configured grant if the configured grant type is Type 2.

Additionally or alternatively preferably, the UE could use the HARQ process to perform the uplink transmission based on the configured grant if the triggering event of the random access procedure is a UL data arrival.

Additionally or alternatively preferably, the UE would not use the HARQ process to perform the uplink transmission based on the configured grant if the triggering event of the random access procedure is a beam failure recovery.

Additionally or alternatively preferably, the UE could use the HARQ process to perform the uplink transmission based on the configured grant if data, which triggers the random access procedure associated with the Msg3, is from a logical channel with a lower priority level than any priority level of the logical channels with data available for transmission using the configured grant.

Additionally or alternatively preferably, the UE would not use the HARQ process to perform the uplink transmission based on the configured grant if data in Msg3 is from a logical channel with a higher priority than all priority of logical channels with data available for transmission using the configured grant.

Additionally or alternatively preferably, the UE could use the HARQ process to perform the uplink transmission based on the configured grant if data, which triggers the random access procedure associated with the Msg3, is from a logical channel with a lower priority level than any priority level of the logical channels with data available for transmission for which a logical channel SR masking (*logicalChannelSR-Mask*) is setup by upper layers.

Additionally or alternatively preferably, the UE would not use the HARQ process to perform the uplink transmission based on the configured grant if data, which triggers the random access procedure associated with the Msg3, is from a logical channel with a higher priority level than all priority levels of the logical channels with data available for transmission for which a logical channel SR masking (*logicalChannelSR-Mask*) is setup by upper layers.

Preferably, the UE could start the timer in response to a transmission of Msg3.

Additionally or alternatively preferably, the UE could start the timer when (or because) an Msg3 transmission occurs.

Preferably, the UE could restart the timer in response to a retransmission of Msg3.

Additionally or alternatively preferably, the UE could start the timer when (or because) an Msg3 retransmission occurs.

Preferably, the ongoing random access procedure could be a contention-based random access procedure.

Preferably, the ongoing random access procedure could be initiated for a beam failure recovery.

Preferably, the ongoing random access procedure could be initiated for an UL data arrival.

Preferably, the UE could receive an uplink grant on the PDCCH addressed to its C-RNTI after the Msg3 transmission.

Preferably, the UE could receive an uplink grant on the PDCCH addressed to its C-RNTI after the Msg3 retransmission, and the HARQ process could be associated with a HARQ process identifier 0.

Another concept of the disclosed embodiments is that a UE could determine whether to use a HARQ process (e.g. HARQ process identifier 0) to perform an uplink transmission (in a Serving Cell) based on a configured grant during an ongoing random access procedure (in the Serving Cell).

Preferably, the UE would not use (or is not allowed to) the HARQ process to perform the uplink transmission based on the configured grant during the ongoing random access procedure.

Preferably, the UE would start or restart *configuredGrantTimer* of the HARQ process in response to a random access preamble transmission.

Preferably, the UE could determine whether to use the HARQ process to perform the uplink transmission based on the status of a timer, e.g. *ra-ResponseWindow.*

Preferably, the UE could start or restart the *configuredGrantTimer* of the HARQ process in response to the start of *ra-ResponseWindow.*

Additionally or alternatively preferably, the UE could further determine to use the HARQ process to perform the uplink transmission based on the configured grant type of the configured grant.

Additionally or alternatively preferably, the UE could further determine to use the HARQ process to perform the uplink transmission based on the triggering event of the random access procedure.

Additionally or alternatively preferably, the UE could further determine to use the HARQ process to perform the uplink transmission based on parameter(s) of the logical channels.

Preferably, the parameter(s) could include *priority.*

Preferably, the parameter(s) could include *configuredGrantTypelAllowed.*

Preferably, the parameter(s) could include *logicalChannelSR-Mask.*

Preferably, the *logicalChannelSR-Mask* indicates whether the SR masking is configured for a logical channel and whether it is configured by RRC.

Preferably, the ongoing random access procedure is performed on a Serving Cell configured with the configured grant.

Preferably, the HARQ process could be associated with a HARQ process identifier 0.

Preferably, the UE could determine whether to use the HARQ process to perform the uplink transmission based on the status of a timer, e.g. *configuredGrantTimer.*

Preferably, the UE would not use the HARQ process to perform the uplink transmission based on the configured grant if *ra-ResponseWindow* is running.

Additionally or alternatively preferably, the UE could use the HARQ process to perform the uplink transmission based on the configured grant if *ra-ResponseWindow* is not running.

Additionally or alternatively preferably, the UE would not use the HARQ process to perform the uplink transmission based on the configured grant if *configuredGrantTimer* is running.

Additionally or alternatively preferably, the UE could use the HARQ process to perform the uplink transmission based on the configured grant if *configuredGrantTimer* is not running.

Additionally or alternatively preferably, the UE could use the HARQ process to perform the uplink transmission based on the configured grant if the configured grant type is Type 1.

Additionally or alternatively preferably, the UE would not use the HARQ process to perform the uplink transmission based on the configured grant if the configured grant type is Type 2.

Additionally or alternatively preferably, the UE could use the HARQ process to perform the uplink transmission based on the configured grant if the triggering event of the random access procedure is an UL data arrival.

Additionally or alternatively preferably, the UE would not use the HARQ process to perform the uplink transmission based on the configured grant if the triggering event of the random access procedure is a beam failure recovery.

Another concept of the disclosed embodiments is a UE could determine whether to use a HARQ process (e.g., HARQ process 0) to perform a transmission (in a Serving Cell) associated with an uplink grant indicated by a random access response based on the status of a timer, e.g., *configuredGrantTimer* (in the Serving Cell).

Additionally or alternatively preferably, the UE could determine whether to use the HARQ process to perform a transmission based on an uplink grant for the UE's temporary C-RNTI based on the status of a timer.

Additionally or alternatively preferably, the UE could further determine whether to use the HARQ process to perform a transmission based on configured grant type of the configured grant.

Additionally or alternatively preferably, the UE could further determine whether to use the HARQ process to perform a transmission based on the triggering event of the random access procedure.

Additionally or alternatively preferably, the UE could further determine whether to use the HARQ process to perform a transmission based on the parameters of the logical channels.

Preferably, the parameter(s) could include *priority.*

Preferably, the parameter(s) could include *configuredGrantTypelAllowed.*

Preferably, the parameter(s) could include *logicalChannelSR-Mask.*

Preferably, *logicalChannelSR-Mask* indicates whether the SR masking is configured for a logical channel and whether it is configured by a RRC.

Preferably, the UE could determine whether to use the HARQ process to perform the uplink transmission based on the status of the timer, e.g., *configuredGrantTimer.*

Preferably, the transmission based on an uplink grant indicated by a random access response is a Msg3 transmission.

Preferably, the transmission based on an uplink grant for the UE's temporary C-RNTI is a Msg3 retransmission.

Preferably, the UE could receive the random access response after a random access preamble transmission in a random access procedure.

Preferably, the HARQ process could be associated with a HARQ process identifier 0.

Preferably, the random access procedure could be initiated for a beam failure recovery.

Preferably, the random access procedure could be initiated for an UL data arrival.

Preferably, the random access procedure could be a contention-based random access procedure.

Preferably, the UE could perform the transmission if the timer is running and the timer is running in response to a Msg3 transmission.

Additionally or alternatively preferably, the UE could perform the transmission if the timer is running and the timer is running in response to a Msg3 retransmission.

Additionally or alternatively preferably, the UE could not perform the transmission if the timer is running and the timer is running in response to a reception of an uplink grant for the UE's C-RNTI.

Additionally or alternatively preferably, the UE could not perform the transmission if the timer is running and the timer is running in response to a reception of an uplink grant for the UE's CS-RNTI.

Additionally or alternatively preferably, the UE could not perform the transmission if the timer is running and the timer is running in response to a transmission of an uplink grant for the UE's C-RNTI.

Additionally or alternatively preferably, the UE could not perform the transmission if the timer is running and the timer is running in response to a transmission of an uplink grant for the UE's CS-RNTI.

Additionally or alternatively preferably, the UE could not perform the transmission if the timer is running and the timer is running in response to a transmission of a configured grant.

Additionally or alternatively preferably, the UE could perform the transmission if the timer is running and the random access procedure is initiated for a beam failure recovery.

Additionally or alternatively preferably, the UE would not perform the transmission if the timer is running and the random access procedure is initiated for an UL data arrival.

Additionally or alternatively preferably, the UE could perform the transmission if the timer is running and the data, which triggers the random access procedure associated with the Msg3, is from a logical channel with a higher priority level than all the priority levels of the logical channels with data available for transmission using the configured grant.

Additionally or alternatively preferably, the UE would not perform the transmission if the timer is running and the data, which triggers the random access procedure associated with the Msg3, is from a logical channel with a lower priority level than any priority level of the logical channels with data available for transmission using the configured grant.

Additionally or alternatively preferably, the UE could perform the transmission if the timer is running and the data, which triggers the random access procedure associated with the Msg3, is from a logical channel with a higher priority level than all the priority levels of the logical channels with data available for transmission for which the logical channel SR masking (*logicalChannelSR-Mask*) is setup by the upper layers.

Additionally or alternatively preferably, the UE would not perform the transmission if the timer is running and the data, which triggers the random access procedure associated with the Msg3, is from a logical channel with a lower priority level than any priority level of the logical channels with data available for transmission for which the logical channel SR masking (*logicalChannelSR-Mask*) is setup by the upper layers.

Additionally or alternatively preferably, the UE could perform the transmission if the timer is running and the configured grant type is Type2.

Additionally or alternatively preferably, the UE would not perform the transmission if the timer is running and the configured grant type is Type1 and the data in Msg3 buffer is from a logical channel with *configuredGrantTypeIAllowed* not present.

Preferably, the priority of the logical channels is configured by the RRC.

Another concept of the disclosed embodiments is a UE could determine whether to start or restart a timer associated with a HARQ process (e.g., a HARQ process identifier 0, *configuredGrantTimer* (in a Serving Cell)), when a Msg3 transmission or retransmission occurs based on the parameter(s) of the logical channels if the HARQ process is associated with a configured grant (in the Serving Cell).

Additionally or alternatively preferably, a UE could determine whether to start or restart the timer associated with a HARQ process (e.g., a HARQ process identifier 0) when a Msg3 transmission or retransmission occurs based on a configured grant type of the configured grant.

Additionally or alternatively preferably, a UE could determine whether to start or restart the timer associated with a HARQ process (e.g., a HARQ process identifier 0) when a Msg3 transmission or retransmission occurs based on the triggering event of a random access procedure.

Preferably, the Msg3 transmission or retransmission is performed in the random access procedure.

Preferably, the parameter(s) could include *priority.*

Preferably, the parameter(s) could include *configuredGrantTypeIAllowed.*

Preferably, the parameter(s) could include *logicalChannelSR-Mask.*

Preferably, *logicalChannelSR-Mask* indicates whether the SR masking is configured for a logical channel and whether it is configured by a RRC.

Preferably, the identified HARQ process could be associated with the HARQ process identifier 0.

Preferably, the random access procedure could be triggered for a beam failure recovery.

Preferably, the random access procedure could be triggered for an UL data arrival.

Preferably, the random access procedure could be a contention-based random access procedure.

Preferably, the UE could perform a Msg3 transmission after the random access response reception.

Preferably, the UE would start or restart the timer of the HARQ process in response to a reception of a random access response with an uplink grant.

Additionally or alternatively preferably, the UE would start or restart the timer of the HARQ process in response to a new transmission of Msg3.

Additionally or alternatively preferably, a UE would start or restart the timer of the HARQ process in response to a reception of an uplink grant (addressed to the Temporary C-RNTI) for a Msg3 retransmission.

Additionally or alternatively preferably, a UE would start or restart the timer of the HARQ process in response to a retransmission of Msg3.

Additionally or alternatively preferably, the UE could not start or restart the timer of the HARQ process in response to the transmission of Msg3 if the data in Msg3 is from a logical channel with a lower priority level than any priority levels of the logical channels with data available for transmission using the configured grant.

Additionally or alternatively preferably, the UE could not start or restart the timer of the HARQ process in response to the retransmission of Msg3 if the data in Msg3 is from a logical channel with a lower priority level than any priority level of the logical channels with data available for transmission using the configured grant.

Additionally or alternatively preferably, the UE would start or restart the timer of the HARQ process in response to the transmission of Msg3 if the configured grant is configured grant type 2.

Additionally or alternatively preferably, the UE would start or restart the timer of the HARQ process in response to the retransmission of Msg3 if the configured grant is configured grant type 2.

Additionally or alternatively preferably, the UE could not start or restart the timer of the HARQ process in response to the transmission of Msg3 if the configured grant is configured grant type 1 and the data in Msg3 is from a logical channel with *configuredGrantType1Allowed* not present.

Additionally or alternatively preferably, the UE could not start or restart the timer of the HARQ process in response to the retransmission of Msg3 if the configured grant is configured grant type 1 and the data in Msg3 is from a logical channel with *configuredGrantType1Allowed* not present.

Additionally or alternatively preferably, the UE would not start or restart the timer of the HARQ process in response to the transmission of Msg3 if the triggering event of the random access procedure is UL data arrival.

Additionally or alternatively preferably, the UE could start or restart the timer of the HARQ process in response to the transmission of Msg3 if the triggering event of the random access procedure is beam failure recovery.

Preferably, the parameter *priority* of the logical channels is configured by a RRC.

Preferably, *logicalChannelSR-Mask* indicates whether the SR masking is configured for a logical channel and whether it is configured by a RRC.

According to the invention, two or more of the above concepts and the other approach could be combined. Additionally or alternatively preferably, the UE could not apply above concept(s)/other approach if the random access procedure is not performed on the same Serving Cell as the Serving Cell configured for the configured grant.

Additionally or alternatively preferably, the UE could not apply above concept(s)/other approach if HARQ process for the random access procedure (e.g., for Msg transmission) is not the same as the HARQ process for the configured grant.

Additionally or alternatively preferably, the UE could not apply above concept(s)/other approach if HARQ process for the random access procedure (e.g., for Msg transmission) is not the same as the HARQ process for the uplink grant addressed to the C-RNTI.

According to one exemplary method, the UE receives a first signaling to configure a configured grant, wherein the configured grant is associated with an uplink HARQ process identifier; the UE receives a downlink transmission indicated by a second signaling, wherein the downlink transmission contains an uplink grant, wherein the uplink grant is associated with the uplink HARQ process identifier; and the UE starts or restarts a timer in response to the reception of the downlink transmission, wherein the UE does not perform an uplink transmission associated with the uplink HARQ process identifier based on the configured grant when the timer is running.

Preferably, the first signaling is a RRC message. Alternatively preferably, the first signaling is a PDCCH signal addressed to the UE's CS-RNTI.

Preferably, the UE starts or restarts *configuredGrantTimer* upon receiving the random access response.

According to another exemplary method, the UE receives a first signaling to configure a configured grant, wherein the configured grant is associated with an uplink HARQ process identifier; the UE receives a downlink transmission indicated by a second signaling, wherein the downlink transmission contains an uplink grant, wherein the uplink grant is associated with the uplink HARQ process identifier; the UE performance uplink transmission based on the uplink grant contained in the downlink transmission; and the UE starts or restarts a timer in response to the uplink transmission based on the uplink grant, wherein the UE does not perform an uplink transmission associated with the uplink HARQ process identifier based on the configured grant when the timer is running.

Preferably, the first signaling is a RRC message. Alternatively preferably, the first signaling is a PDCCH signal addressed to the UE's CS-RNTI.

Preferably, the second signaling is received after a random access preamble transmission.

Preferably, the uplink transmission is a Msg3 transmission.

Preferably, the UE starts or restarts *configuredGrantTimer* upon performing the Msg3 transmission.

According to another exemplary method, the UE receives a first signaling to configure a configured grant, wherein the configured grant is associated with an uplink HARQ process identifier; the UE receives a second signaling indicating an uplink retransmission, wherein the second signaling is addressed to the UE's Temporary C-RNTI and contains an uplink grant, wherein the uplink grant is associated with the uplink HARQ process identifier; and the UE starts or restarts a timer in response to the reception of the second signaling, wherein the UE does not perform an uplink transmission associated with the uplink HARQ process identifier based on the configured grant when the timer is running.

Preferably, the first signaling is a RRC message. Alternatively preferably, the first signaling is a PDCCH signal addressed to the UE's CS-RNTI.

Preferably, the UE starts or restarts *configuredGrantTimer* upon receiving the second signaling.

According to another exemplary method, the UE receiving a first signaling to configure a configured grant, wherein the configured grant is associated with an uplink HARQ process identifier; the UE receives a second signaling indicating an uplink retransmission, wherein the second signaling is addressed to the UE's Temporary C-RNTI and contains an uplink grant, wherein the uplink grant is associated with the uplink HARQ process identifier; the UE performs the uplink retransmission based on the second signaling; and the UE starts or restarts a timer in response to the uplink retransmission, wherein the UE does not perform an uplink transmission associated with the uplink HARQ process identifier based on the configured grant when the timer is running.

Preferably, the first signaling is a RRC message. Alternatively preferably, the first signaling is a PDCCH signal addressed to the UE's CS-RNTI.

Preferably, the UE starts or restarts *configuredGrantTimer* upon performing the Msg3 retransmission.

According to one exemplary method, the UE receives a first signaling to configure a configured grant, wherein the configured grant is associated with an uplink HARQ process identifier; the UE receives a second signaling indicating an uplink retransmission, wherein the second signaling is addressed to the UE's Temporary C-RNTI and contains an uplink grant, wherein the uplink grant is associated with the uplink HARQ process identifier; the UE obtains a MAC PDU from Msg3 buffer in response to the reception of the second signaling; and the UE performs the uplink retransmission based on the second signalling to transmit the MAC PDU.

Preferably, the UE stores the MAC PDU in a HARQ buffer associated with the uplink HARQ process identifier.

Preferably, the first signaling is a RRC message. Alternatively preferably, the first signaling is a PDCCH signal addressed to the UE's CS-RNTI.

Preferably, the uplink retransmission indicated by the second signal is a Msg3 retransmission.

Preferably, the Msg3 retransmission takes place in a random access procedure.

Preferably, the random access procedure is initiated for a beam failure recovery.

Preferably, the UE obtains the MAC PDU from Msg3 buffer for Msg3 retransmission.

Preferably, the configured grant is a configured grant Type 1.

Preferably, the configured grant is a configured grant Type 2.

Preferably, the uplink HARQ process identifier is 0.

According to one exemplary method, the UE receiving a downlink transmission indicated by a first signaling, wherein the downlink transmission contains an uplink grant, wherein the uplink grant is associated with an uplink HARQ process identifier; the UE performs an uplink transmission based on the uplink grant contained in the downlink transmission; the UE starts or restarts a timer when (or because) the uplink transmission is performed; the UE receives a second signaling indicating an uplink grant associated with the uplink HARQ process identifier; and the UE performs an uplink transmission based on the uplink grant if the timer is not running.

Preferably, the UE performs no uplink transmission based on the uplink grant if the timer is running.

Preferably, the first signaling is a PDCCH signal addressed to the UE's RA-RNTI.

Preferably, the second signaling is a PDCCH signal addressed to the UE's C-RNTI.

Preferably, the downlink transmission indicated by the first signaling is a random access response.

Preferably, the first signaling is received after a random access preamble transmission.

According to one exemplary method, the UE receives a first signaling to configure a configured grant, wherein the configured grant is associated with an uplink HARQ process identifier; the UE receives a downlink transmission indicated by a second signaling, wherein the downlink transmission contains an uplink grant, wherein the uplink grant is associated with the uplink HARQ process identifier; the UE performs an uplink transmission based on the uplink grant contained in the downlink transmission; the UE starts or restarts a timer when (or because) the uplink transmission is performed based on the uplink grant; and the UE performs an uplink transmission associated with the uplink HARQ process identifier based on the configured grant if the timer is not running.

Preferably, the UE performs no uplink transmission associated with the uplink HARQ process identifier based on the configured grant if the timer is running.

Preferably, the downlink transmission indicated by the second signaling is a random access response.

Preferably, the second signaling is received after a random access preamble transmission

Preferably, the uplink transmission based on the uplink grant contained in the downlink transmission is an Msg3 transmission.

According to one exemplary method, the UE receives a first signaling indicating an uplink retransmission, wherein the first signaling is addressed to the UE's Temporary C-RNTI and contains an uplink grant, wherein the uplink grant is associated with an uplink HARQ process identifier; the UE performs an uplink retransmission based on the uplink grant; the UE starts or restarts a timer when (or because) the uplink retransmission is performed; the UE receives a second signaling indicating an uplink grant associated with the uplink HARQ process identifier; and the UE performs an uplink transmission based on the uplink grant if the timer is not running.

Preferably, the UE performs no uplink transmission based on the uplink grant if the timer is running.

Preferably, the first signaling is a PDCCH signal addressed to the UE's Temporary C-RNTI.

Preferably, the second signaling is a PDCCH signal addressed to the UE's C-RNTI.

Preferably, the uplink retransmission is a Msg3 retransmission.

According to another exemplary method, the UE receives a first signaling to configure a configured grant, wherein the configured grant is associated with an uplink HARQ process identifier; the UE receives a second signaling indicating an uplink retransmission, wherein the second signaling is addressed to the UE's Temporary C-RNTI and contains an uplink grant, wherein the uplink grant is associated with the uplink HARQ process identifier; the UE performs the uplink retransmission based on the uplink grant; the UE starts or restarts a timer when (or because) the uplink transmission is performed; and the UE performs an uplink transmission associated with the uplink HARQ process identifier based on the configured grant if the timer is not running.

Preferably, the UE performs no uplink transmission associated with the uplink HARQ process identifier based on the configured grant if the timer is running.

Preferably, the second signaling is a PDCCH signal addressed to the UE's Temporary C-RNTI.

Preferably, the uplink retransmission based on the second signaling is a Msg3 retransmission.

Preferably, the Msg3 retransmission is in a random access procedure.

Preferably, the timer is *ra-ContentionResolutionTimer*.

According to another exemplary method, the UE receives a signaling to configure a configured grant, wherein the configured grant is associated with an uplink HARQ process identifier; the UE performs an uplink transmission using a selected PRACH, wherein the PRACH is selected in a random access procedure; the UE starts or restarts a timer when (or because) the uplink transmission is performed; and the UE performs an uplink transmission associated with the uplink HARQ process identifier based on the configured grant if the timer is not running.

Preferably, the UE performs no uplink transmission associated with the uplink HARQ process identifier based on the configured grant if the timer is running.

Preferably, the uplink transmission using a selected PRACH is a random access preamble transmission.

Preferably, the timer is a *configuredGrantTimer.*

Preferably, the timer is a *ra-ResponseWindow.*

According to another exemplary method, the UE receives a signaling to configure a configured grant, wherein the configured grant is associated with an uplink HARQ process identifier; and the UE determines whether to perform an uplink transmission associated with the uplink HARQ process identifier at a timing based on whether the HARQ process associated with the uplink HARQ process identifier is used to perform an ongoing random access procedure at the timing.

Preferably, the UE does not perform the uplink transmission associated with the uplink HARQ process identifier at the timing if the HARQ process associated with the uplink HARQ process identifier is used to perform an ongoing random access procedure at the timing.

Preferably, the signaling is a RRC message.

Preferably, the signaling is PDCCH signal addressed to the UE's CS-RNTI.

Preferably, the random access procedure is initiated for beam failure recovery.

According to another exemplary method, the UE receives a first signaling to configure a configured grant, wherein the configured grant is associated with an uplink HARQ process identifier; the UE performs an uplink transmission associated with the uplink HARQ process identifier based on the configured grant; the UE starts or restarts a timer when (or because) the uplink transmission is performed; the UE receives a downlink transmission indicated by a second signaling, wherein the downlink transmission contains an uplink grant, wherein the uplink grant is associated with the uplink HARQ process identifier; and the UE determines whether to perform an uplink transmission associated with the uplink grant contained in the downlink transmission, if the timer is running, based on a parameter or parameters of the logical channels of the data in Msg3 buffer and the data transmitted in the transmission based on the configured grant.

Preferably, the UE determines whether to perform the uplink transmission associated with the uplink grant contained in the downlink transmission based on the *priority* of the logical channel providing the data in Msg3 buffer.

Preferably, the UE determines whether to perform the uplink transmission associated with the uplink grant contained in the downlink transmission based on the *priority* of the logical channel providing the data transmitted in the transmission based on the configured grant.

Preferably, the UE does not perform an uplink transmission associated with the uplink grant contained in the downlink transmission when the timer is running if the *priority* level of any logical channel providing the data transmitted in the transmission based on the configured grant is higher than the *priority* level of the logical channel providing the data in a Msg3 buffer.

Preferably, the *priority* levels of logical channels are configured by the RRC.

According to another exemplary method, the UE receives a first signaling to configure a configured grant, wherein the configured grant is associated with an uplink HARQ process identifier; the UE receives a downlink transmission indicated by a second signaling, wherein the downlink transmission contains an uplink grant, wherein the uplink grant is associated with the uplink HARQ process identifier; the UE performs an uplink transmission associated with the uplink HARQ process identifier based on the configured grant; the UE starts or restarts a timer when (or because) the uplink transmission is performed; and the UE performs an uplink transmission associated with the uplink HARQ process identifier based on the uplink grant if the timer is not running.

Preferably, the UE does not perform the uplink transmission associated with the uplink HARQ process identifier based on the uplink grant if the timer is running.

Preferably, the second signaling is a PDCCH signal addressed to the UE's RA-RNTI.

According to another exemplary method, the UE receives a first signaling to configure a configured grant, wherein the configured grant is associated with an uplink HARQ process identifier; the UE receives a second signaling indicating an uplink grant, wherein the uplink grant is associated with the uplink HARQ process identifier; the UE starts or restarts a timer when (or because) the second signaling is received; the UE receives a downlink transmission indicated by a third signaling, wherein the downlink transmission contains an uplink grant, wherein the uplink grant is associated with the uplink HARQ process identifier; the UE determines whether to perform an uplink transmission associated with the downlink transmission based on the status of the timer; and the UE performs the uplink transmission based on the uplink grant if the timer is not running.

Preferably, the UE does not perform the uplink transmission based on the uplink grant if the timer is running.

Preferably, the second signaling is a PDCCH signal addressed to the UE's C-RNTI.

Preferably, the third signaling is a PDCCH signal addressed to the UE's RA-RNTI.

Preferably, the downlink transmission is a random access response.

Preferably, the uplink transmission associated with the uplink grant contained in the downlink transmission is a Msg3 transmission, wherein the Msg3 transmission is performed in a random access procedure.

According to one exemplary method, the UE receives a first signaling to configure a configured grant, wherein the configured grant is associated with an uplink HARQ process identifier; the UE performs a transmission associated with the uplink HARQ process identifier based on the configured grant; the UE starts or restarts a timer when (or because) the uplink transmission is performed; the UE receives a downlink transmission indicated by a second signaling, wherein the downlink transmission contains an uplink grant, and wherein the uplink grant is associated with the uplink HARQ process identifier; and the UE determines whether to perform an uplink transmission based on the uplink grant contained in the downlink transmission, if the timer is running, based on a type of the currently active configured grant on a Serving Cell.

Preferably, the UE does not perform an uplink transmission based on the uplink grant contained in the downlink transmission when the timer is running if the currently active configured grant type of the Serving Cell is a configured grant type 1.

According to one exemplary method, the UE receives a first signaling to configure a configured grant, wherein the configured grant is associated with an uplink HARQ process identifier; the UE receives a downlink transmission indicated by a second signaling, wherein the downlink transmission contains an uplink grant, and wherein the uplink grant is associated with the uplink HARQ process identifier; the UE performs an uplink transmission based on the uplink grant; the UE determines whether to start or restart a timer when (or because) the uplink transmission is performed based on the attributes of data in the Msg3 and an active configured grant type of a Serving Cell; and the UE performs an uplink transmission associated with the uplink HARQ process identifier based on the configured grant if the timer is not running.

Preferably, the UE does not perform the uplink transmission associated with the uplink HARQ process identifier based on the configured grant if the timer is running.

Preferably, the third signaling is a PDCCH signal addressed to the UE's RA-RNTI.

According to another exemplary method, the UE receives a first signaling to configure a configured grant, wherein the configured grant is associated with an uplink HARQ process identifier; the UE receives a second signaling indicating an uplink retransmission, wherein the second signaling is addressed to the UE's Temporary C-RNTI and contains an uplink grant, wherein the uplink grant is associated with the uplink HARQ process identifier; the UE performs the uplink retransmission based on the second signaling; the UE determines whether to start or restart a timer when the uplink retransmission is performed based on the attributes of the data in the Msg3 buffer and an active configured grant type of a Serving Cell; and the UE performs an uplink transmission associated with the uplink HARQ process identifier based on the configured grant if the timer is not running.

Preferably, the UE does not perform the uplink transmission associated with the uplink HARQ process identifier based on the configured grant if the timer is running.

Preferably, the UE determines whether to start or restart the timer based on the *configuredGrantType1Allowed* of the logical channel providing the data in the Msg3 buffer.

Preferably, the active configured grant type of the Serving Cell is Type 1.

Preferably, the active configured grant type of the Serving Cell is Type 2.

Preferably, the UE starts or restarts the timer if the *configuredGrantType1Allowed* of the logical channel providing the data in the Msg3 buffer is present and the active configured grant type of the Serving Cell is Type 1.

Preferably, the UE starts or restarts the timer if the *configuredGrantType1Allowed* of the logical channel providing the data in the Msg3 buffer is present and the active configured grant type of the Serving Cell is Type 2.

Preferably, the UE starts or restarts the timer if the *configuredGrantType1Allowed* of the logical channel providing the data in the Msg3 buffer is not present and the active configured grant type of the Serving Cell is Type 2.

Preferably, the first signaling is a RRC message.

Preferably, the first signaling is a PDCCH signal addressed to the UE's CS-RNTI.

Preferably, the seconding signaling is a PDCCH signal addressed to the UE's RA-RNTI.

Preferably, the *configuredGrantType1Allowed* is configured by the RRC.

Preferably, the timer is *configuredGrantTimer.*

Preferably, the random access procedure is initiated for UL data arrival.

Preferably, the random access preamble transmission is performed in a random access procedure.

Preferably, the random access procedure is a contention-based random access procedure.

Preferably, the currently active configured grant type of the Serving Cell is configured by the RRC.

Preferably, the HARQ process identifier is 0.

Preferably, the HARQ process is associated with HARQ process identifier 0.

Preferably, the random access procedure is initiated on the same Serving cell as the Serving Cell configuring the configured grant.

According to another exemplary method, the UE initiates a RA procedure; the UE receives a RA response during the RA procedure, wherein the RA response indicates a first UL grant for the UE to perform a Msg3 transmission by a specific HARQ process; the UE receives a second UL grant for the UE to perform a specific transmission, wherein the specific transmission is to be performed during the RA procedure; and the UE determines whether to perform the specific transmission at least based on whether the specific transmission is to be performed by the specific HARQ process used for the Msg3 transmission, wherein the Msg3 transmission and the specific transmission are not overlapped in the time domain.

Preferably, the UE performs the specific transmission if the specific transmission is not performed by the specific HARQ process.

Preferably, the UE does not perform the specific transmission if the specific transmission is performed by the specific HARQ process.

Preferably, the UE determines whether to perform the specific transmission further based on configured grant type of the second UL grant.

Preferably, the UE determines whether to perform the specific transmission is further based on the triggering event of the random access procedure.

Preferably, the UE determines whether to perform the specific transmission is further based on the logical channel priority of the data to be transmitted.

Preferably, the UE determines whether to perform the specific transmission is further based on whether logical channel for data to be carried by the specific transmission is for URLLC service(s).

Preferably, the UE determines whether to perform the specific transmission is further based on the periodicity of the second UL grant.

Preferably, the UE performs the specific transmission if the specific transmission is performed by the specific HARQ process and the second UL grant is a configured grant type 1.

Preferably, the UE does not perform the specific transmission if the specific transmission is performed by the specific HARQ process and the second UL grant is a configured grant type 2.

Preferably, the UE performs the specific transmission if the specific transmission is performed by the specific HARQ process and the RA procedure is initiated due to UL data arrival.

Preferably, the UE does not perform the specific transmission if the specific transmission is performed by the specific HARQ process and the RA procedure is initiated due to beam failure recovery.

Preferably, the UE performs the specific transmission if the specific transmission is performed by the specific HARQ process and the priority of the logical channel for the data to be carried by the specific transmission has a higher priority than the priority of the logical channel for the data to be carried by the Msg3 transmission.

Preferably, the UE does not perform the specific transmission if the specific transmission is performed by the specific HARQ process and the priority of the logical channel for the data to be carried by the specific transmission has a lower priority than the priority of the logical channel for the data to be carried by the Msg3 transmission.

Preferably, the second UL grant is a configured grant.

Preferably, the second UL grant is a dynamic grant.

Preferably, the second UL grant is provided by a RRC message.

Preferably, the second UL grant is provided by PDCCH.

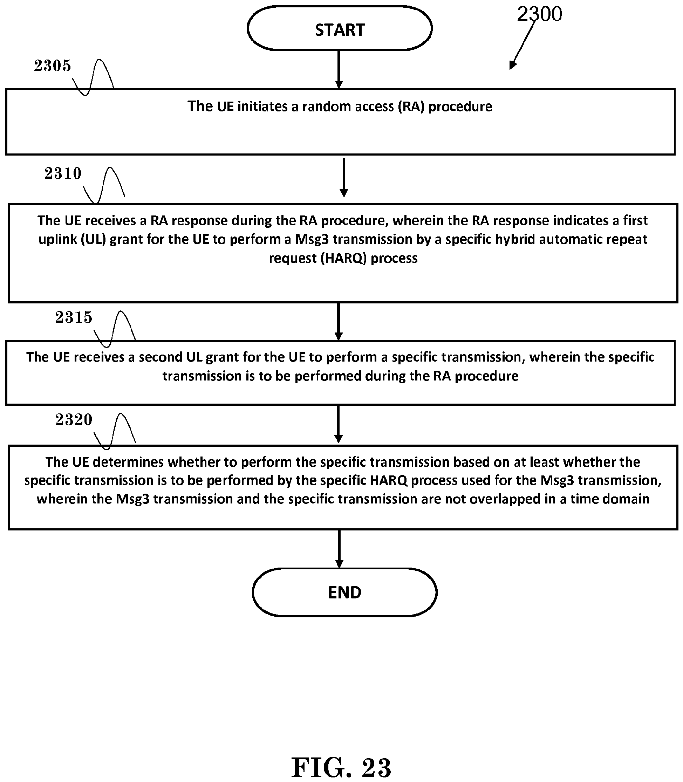

FIG. 23 is a flow chart 2300 according to one exemplary embodiment from the perspective of a UE. In step 2305 the UE initiates a RA procedure. In step 2310, the UE receives a RA response during the RA procedure, wherein the RA response indicates a first UL grant for the UE to perform a Msg3 transmission by a specific HARQ process. In step 2315, the UE receives a second UL grant for the UE to perform a specific transmission, wherein the specific transmission is to be performed during the RA procedure. In step 2320, the UE determines whether to perform the specific transmission at least based on whether the specific transmission is to be performed by the specific HARQ process used for the Msg3 transmission, wherein the Msg3 transmission and the specific transmission are not overlapped in the time domain.

Preferably, the UE performs the specific transmission if the specific transmission is not performed by the specific HARQ process.

Preferably, the UE does not perform the specific transmission if the specific transmission is to be performed by the specific HARQ process.

Preferably, determining whether to perform the specific transmission is further based on a configured grant type of the second UL grant.

Preferably, determining whether to perform the specific transmission is further based on a triggering event of the RA procedure.

Preferably, determining whether to perform the specific transmission is further based on a logical channel priority of data to be transmitted.

Preferably, determining whether to perform the specific transmission is further based on whether a logical channel for data to be carried by the specific transmission is for a Ultra-Reliable and Low Latency Communication (URLLC) service.

Preferably, determining whether to perform the specific transmission is further based on a periodicity of the second UL grant.

Preferably, the second UL grant is a configured grant or a dynamic grant.

Preferably, the second UL grant is provided by a radio resource control (RRC) message or is provided by a Physical Downlink Control Channel (PDCCH).

As those skilled in the art will appreciate, the various disclosed embodiments may be combined to form new embodiments and/or methods.

Referring back to FIGS. 3 and 4, preferably, the device 300 includes a program code 312 stored in memory 310. The CPU 308 could execute program code 312 (i) to initiate a RA procedure, (ii) to receive a RA response during the RA procedure, wherein the RA response indicates a first UL grant for the UE to perform a Msg3 transmission by a specific HARQ process, (iii) to receive a second UL grant for the UE to perform a specific transmission, wherein the specific transmission is to be performed during the RA procedure; and (iv) to determine whether to perform the specific transmission based on at least whether the specific transmission is to be performed by the specific HARQ process used for the Msg3 transmission, wherein the Msg3 transmission and the specific transmission are not overlapped in a time domain.

Furthermore, the CPU 308 can execute the program code 312 to perform all of the above-described actions and steps or others methods described herein.

The above-disclosed methods provide guarantees that during a random access procedure that there are sufficient retransmission opportunities for Msg3 transmissions and uplink transmissions based on configured grants when a HARQ process is configured for a configured grant. The above-disclosed methods guarantee a contention resolution procedure can be successfully performed when a UE is configured with a configured grant or receives a dynamic grant. The above-disclosed methods guarantee sufficient retransmission opportunities for prioritized data associated with configured grant. The above-disclosed methods guarantee that Msg3 transmissions or retransmissions will not be interrupted by UL transmissions on nonoverlapping time domain using the same HARQ process during a random access procedure.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the appended claims.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the appended claims. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the the scope of the appended claims.

## Claims

1. A method of a User Equipment, in the following also referred to as UE, the method comprising:

initiating a random access, in the following also referred to as RA, procedure (2305);

receiving a RA response during the RA procedure, wherein the RA response indicates a first uplink, in the following also referred to as UL, grant for the UE to perform a Msg3 transmission by a specific hybrid automatic repeat request, in the following also referred to as HARQ, process (2310);

receiving a second UL grant for the UE to perform a specific transmission, wherein the specific transmission is to be performed during the RA procedure (2315); and

if the specific transmission is not performed by the specific HARQ process used for the Msg3 transmission then performing the specific transmission, and if the specific transmission is to be performed by the specific HARQ process used for the Msg3 transmission, wherein the Msg3 transmission and the specific transmission are not overlapped in a time domain, then determining whether to perform the specific transmission (2320) based on one or more of: whether the second UL grant is provided by a radio resource control, in the following also referred to as RRC, message or is provided by a Physical Downlink Control Channel, in the following also referred to as PDCCH, a triggering event of the RA procedure, a logical channel priority of data to be transmitted, and whether a logical channel for data to be carried by the specific transmission is for a Ultra-Reliable and Low Latency Communication, in the following also referred to as URLLC, service.

2. The method of claim 1, further comprising:
performing the specific transmission if the second UL grant is provided by the RRC message.

3. The method of claim 1 or 2, further comprising:
not performing the specific transmission if the second UL grant is provided by the PDCCH.

4. The method of any one of claims 1 to 3, further comprising:
performing the specific transmission if the triggering event of the RA procedure is UL data arrival.

5. The method of any one of claims 1 to 4, further comprising:
not performing the specific transmission if the triggering event of the RA procedure is beam failure recovery.

6. The method of any one of claims 1 to 5, further comprising:
performing the specific transmission if data to be transmitted by the specific transmission has a higher logical channel priority than data to be transmitted by the Msg3 transmission.

7. The method of any one of claims 1 to 6, further comprising:
not performing the specific transmission if data to be transmitted by the specific transmission has a lower logical channel priority than data to be transmitted by the Msg3 transmission.

8. The method of any one of claims 1 to 7, further comprising:
performing the specific transmission if the logical channel for data to be carried by the specific transmission is for the URLLC.

9. The method of any one of claims 1 to 8, further comprising:
not performing the specific transmission if the logical channel for data to be carried by the specific transmission is not for the URLLC.

10. The method of any one of claims 1 to 9, wherein the second UL grant is a configured grant or a dynamic grant.

11. A User Equipment, in the following also referred to as UE, comprising:

a control circuit (306);
a processor (308) installed in the control circuit (306); and
a memory (310) installed in the control circuit (306) and coupled to the processor (308);
**characterized in that** the processor (308) is configured to execute a program code (312) stored in the memory (310) to perform the method steps as defined in any one of the preceding claims.

**Patentansprüche**

1. Verfahren einer Teilnehmerausrüstung, im Folgenden auch als UE bezeichnet, wobei das Verfahren umfasst:

Initiieren einer Zufallszugriffs, im Folgenden auch als RA bezeichnet, -Prozedur (2305);
Empfangen einer RA-Antwort während der RA-Prozedur, wobei die RA-Antwort eine erste Uplink, im Folgenden auch als UL bezeichnet, -Bewilligung für die UE anzeigt, um eine Msg3-Übertragung durch einen spezifischen Hybrid Automatic Repeat Request, im Folgenden auch als HARQ bezeichnet, Prozess auszuführen (2310);
Empfangen einer zweiten UL-Bewilligung für die UE, um eine spezifische Übertragung auszuführen, wobei die spezifische Übertragung während der RA-Prozedur auszuführen ist (2315); und
wenn die spezifische Übertragung nicht durch den spezifischen HARQ-Prozess ausgeführt wird, der für die Msg3-Übertragung verwendet wird, dann Ausführen der spezifischen Übertragung, und wenn die spezifische Übertragung durch den spezifischen HARQ-Prozess auszuführen ist, der für die Msg3-Übertragung verwendet wird, wobei die Msg3-Übertragung und die spezifische Übertragung nicht in einem Zeitbereich überlappen, dann Bestimmen, ob die spezifische Übertragung auszuführen ist (2320) basierend auf einem oder mehr davon: ob die zweite UL-Bewilligung durch eine Funkressourcensteuerungs, im Folgenden auch als RRC bezeichnet, -Nachricht bereitgestellt wird oder durch einen Physical Downlink Control Channel, im Folgenden auch als PDCCH bezeichnet, bereitgestellt wird, ein Auslöseereignis der RA-Prozedur, eine Logikkanalpriorität von zu übertragenden Daten, und ob ein Logikkanal für durch die spezifische Übertragung zu übertragende Daten für einen Dienst einer ultrazuverlässigen und niederlatenten Kommunikation, im Folgenden auch als URLLC bezeichnet, vorgesehen ist.

2. Verfahren gemäß Anspruch 1, weiter umfassend:
Ausführen der spezifischen Übertragung, wenn die zweite UL-Bewilligung durch die RRC-Nachricht bereitgestellt wird.

3. Verfahren gemäß Anspruch 1 oder 2, weiter umfassend:
Nicht-Ausführen der spezifischen Übertragung, wenn die zweite UL-Bewilligung durch den PDCCH bereitgestellt wird.

4. Verfahren gemäß einem der Ansprüche 1 bis 3, weiter umfassend:
Ausführen der spezifischen Übertragung, wenn das Auslöseereignis der RA-Prozedur die UL-Datenankunft ist.

5. Verfahren gemäß einem der Ansprüche 1 bis 4, weiter umfassend:
Nicht-Ausführen der spezifischen Übertragung, wenn das Auslöseereignis der RA-Prozedur eine Strahfehlerwiederherstellung ist.

6. Verfahren gemäß einem der Ansprüche 1 bis 5, weiter umfassend:
Ausführen der spezifischen Übertragung, wenn durch die spezifische Übertragung zu übertragende Daten eine höhere Logikkanalpriorität aufweisen als durch die Msg3-Übertragung zu übertragende Daten.

7. Verfahren gemäß einem der Ansprüche 1 bis 6, weiter umfassend:
Nicht-Ausführen der spezifischen Übertragung, wenn durch die spezifische Übertragung zu übertragende Daten eine geringere Logikkanalpriorität aufweisen als durch die Msg3-Übertragung zu übertragende Daten.

8. Verfahren gemäß einem der Ansprüche 1 bis 7, weiter umfassend:
Ausführen der spezifischen Übertragung, wenn der Logikkanal für durch die spezifische Übertragung zu übertragende Daten für die URLLC vorgesehen ist.

9. Verfahren gemäß einem der Ansprüche 1 bis 8, weiter umfassend:
Nicht-Ausführen der spezifischen Übertragung, wenn der Logikkanal für durch die spezifische Übertragung zu übertragende Daten nicht für die URLLC vorgesehen ist.

10. Verfahren gemäß einem der Ansprüche 1 bis 9, wobei die zweite UL-Bewilligung eine konfigurierte Bewilligung oder eine dynamische Bewilligung ist.

11. Teilnehmerausrüstung, im Folgenden auch als UE bezeichnet, aufweisend:

eine Steuerungsschaltung (306);
einen Prozessor (308), der in der Steuerungsschaltung (306) installiert ist; und
einen Speicher (310), der in der Steuerungsschaltung (306) installiert und mit dem Prozessor (308) verbunden ist;
**dadurch gekennzeichnet, dass** der Prozessor (308) ausgelegt ist, einen Programm-Code (312), der in dem Speicher (310) gespeichert ist, auszuführen, um die in einem der vorstehenden Ansprüche definierten Verfahrensschritte auszuführen.

**Revendications**

1. Procédé d'un Équipement Utilisateur, également dénommé ci-après UE, le procédé comprenant le fait :

   d'initier une procédure (2305) d'accès aléatoire, également dénommé ci-après RA ;
   de recevoir une réponse RA pendant la procédure RA, où la réponse RA indique une première autorisation de liaison montante, également dénommée ci-après UL, pour que l'UE réalise une transmission de Msg3 par un procédé (2310) de demande de répétition automatique hybride, également dénommée ci-après HARQ, spécifique ;
   de recevoir une deuxième autorisation UL pour que l'UE réalise une transmission spécifique, où la transmission spécifique doit être réalisée pendant la procédure RA (2315) ; et
   si la transmission spécifique n'est pas réalisée par le procédé HARQ spécifique utilisé pour la transmission de Msg3, ensuite de réaliser la transmission spécifique, et si la transmission spécifique doit être réalisée par le procédé HARQ spécifique utilisé pour la transmission de Msg3, où la transmission de Msg3 et la transmission spécifique ne se chevauchent pas dans un domaine temporel, ensuite de déterminer s'il faut réaliser la transmission spécifique (2320) sur la base d'un ou de plusieurs fait(s) parmi :
   si la deuxième autorisation UL est fournie par un message de commande de ressources radio, également dénommée ci-après RRC ou est fournie par un Canal de Commande de Liaison Descendante Physique, également dénommé ci-après PDCCH, un événement déclencheur de la procédure RA, une priorité de canal logique de données à transmettre, et si un canal logique pour des données à transporter par la transmission spécifique est pour un service de Communication Ultra-Fiable et à Faible Latence, également dénommée ci-après URLLC.

2. Procédé de la revendication 1, comprenant en outre le fait :
   de réaliser la transmission spécifique si la deuxième autorisation UL est fournie par le message RRC.

3. Procédé de la revendication 1 ou 2, comprenant en outre le fait :
   de ne pas réaliser la transmission spécifique si la deuxième autorisation UL est fournie par PDCCH.

4. Procédé de l'une quelconque des revendications 1 à 3, comprenant en outre le fait :
   de réaliser la transmission spécifique si l'événement déclencheur de la procédure RA est une arrivée de données UL.

5. Procédé de l'une quelconque des revendications 1 à 4, comprenant en outre le fait :
   de ne pas réaliser la transmission spécifique si l'événement déclencheur de la procédure RA est une récupération en cas de défaillance de faisceau.

6. Procédé de l'une quelconque des revendications 1 à 5, comprenant en outre le fait :
   de réaliser la transmission spécifique si les données à transmettre par la transmission spécifique ont une priorité de canal logique plus élevée que celle des données à transmettre par la transmission de Msg3.

7. Procédé de l'une quelconque des revendications 1 à 6, comprenant en outre le fait :
   de ne pas réaliser la transmission spécifique si les données à transmettre par la transmission spécifique ont une priorité de canal logique plus faible que celle des données à transmettre par la transmission de Msg3.

8. Procédé de l'une quelconque des revendications 1 à 7, comprenant en outre le fait :
   de réaliser la transmission spécifique si le canal logique pour des données à transporter par la transmission spécifique est pour URLLC.

9. Procédé de l'une quelconque des revendications 1 à 8, comprenant en outre le fait :
   de ne pas réaliser la transmission spécifique si le canal logique pour des données à transporter par la transmission spécifique n'est pas pour URLLC.

10. Procédé de l'une quelconque des revendications 1 à 9, dans lequel la deuxième autorisation UL est une autorisation configurée ou une autorisation dynamique.

**11.** Équipement Utilisateur, également dénommé ci-après UE, comprenant :

un circuit de commande (306) ;
un processeur (308) installé dans le circuit de commande (306) ; et
une mémoire (310) installée dans le circuit de commande (306) et couplée au processeur (308) ;
**caractérisé en ce que** le processeur (308) est configuré pour exécuter un code de programme (312) stocké dans la mémoire (310) pour réaliser les étapes du procédé telles que définies dans l'une quelconque des revendications précédentes.

FIG. 1

**FIG. 2**

_300_

```
┌─────────────────────────────────────────────┐
│  ┌──────────────┐      ┌──────────────┐       │
│  │   INPUT      │      │   OUTPUT     │       │
│  │   DEVICE     │      │   DEVICE     │       │
│  │   302        │      │   304        │       │
│  └──────┬───────┘      └──────┬───────┘       │
│         ↕                     ↕               │
│  ┌──────────────────────────────────────┐    │
│  │       CONTROL CIRCUIT 306             │    │
│  │  ┌────────────────────────────────┐  │    │
│  │  │          CPU 308               │  │    │
│  │  └───────────────┬────────────────┘  │    │
│  │                  ↕                    │    │
│  │  ┌────────────────────────────────┐  │    │
│  │  │        MEMORY 310              │  │    │
│  │  │  ┌──────────────────────────┐  │  │    │
│  │  │  │ PROGRAM CODE 312         │  │  │    │
│  │  │  └──────────────────────────┘  │  │    │
│  │  └────────────────────────────────┘  │    │
│  └──────────────────┬───────────────────┘    │
│                     ↕                         │
│  ┌──────────────────────────────────────┐    │
│  │         TRANSCEIVER 314               │    │
│  └──────────────────────────────────────┘    │
└─────────────────────────────────────────────┘
```

FIG. 3

PROGRAM CODE *312*

APPLICATION LAYER *400*

LAYER 3 *402*

LAYER 2 *404*

LAYER 1 *406*

FIG. 4

FIG. 5

FIG. 6

**FIG. 7**

**FIG. 8**

**FIG. 9**

**FIG. 10**

**FIG. 11**

**FIG. 12**

RAR   P0 via configured/ dynamic grant   Msg3   UL grant for PDU A retx   No PDU A for retransmission

HARQ buffer of process 0 (p0)   PDU A   PDU B   PDU B

Msg3 buffer   PDU B

**FIG. 13**

RAR   Msg3   P0 via configured/ dynamic grant   UL grant for Msg3 retx   No PDU B for retransmission

HARQ buffer of process 0 (p0)   PDU B   PDU C   PDU C

Msg3 buffer   PDU B

**FIG. 14**

RAR

Msg3

HARQ buffer
of process 0 (p0)

Not using
configured/dyn
amic grant for
p0

PDU B

Msg3 buffer

PDU B

## FIG. 15

UL grant
for Msg3
retx

RAR

Msg3

Msg3 retx

HARQ buffer
of process 0 (p0)

PDU B

Not using
configured grant
(e.g. Type-2)
For HARQ
process 0

PDU B

Msg3 buffer

PDU B

## FIG. 16

FIG. 17

FIG. 18

Transmission fail

msg3

PDCCH for TC-RNTI

msg3

Msg3
transmission

Configured
grant
(invalid)

Msg3
retransmission

configuredGrantTimer

t4          t5          t6          t7

Restart timer          Restart timer

**FIG. 19**

Transmission fail

msg3

PDCCH for TC-RNTI

Msg3
transmission

Configured
grant
(invalid)

Msg3
retransmission

configuredGrantTimer

t4          t5          t6          t7

Restart timer          start timer

**FIG. 20**

FIG. 21

FIG. 22

START

2300

2305

The UE initiates a random access (RA) procedure

2310

The UE receives a RA response during the RA procedure, wherein the RA response indicates a first uplink (UL) grant for the UE to perform a Msg3 transmission by a specific hybrid automatic repeat request (HARQ) process

2315

The UE receives a second UL grant for the UE to perform a specific transmission, wherein the specific transmission is to be performed during the RA procedure

2320

The UE determines whether to perform the specific transmission based on at least whether the specific transmission is to be performed by the specific HARQ process used for the Msg3 transmission, wherein the Msg3 transmission and the specific transmission are not overlapped in a time domain

END

FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010322172 A1

**Non-patent literature cited in the description**

- Medium Access Control (MAC) protocol specification. R2-1803854, 3GPP TS 38.321. 3rd Generation Partnership Project
- R2-1801701. *RAN2 #100 meeting report*
- R2-1801702. *Report of 3GPP TSGRAN2#AH-1801 meeting*
- Overall description. *TS 38.300 V15.0.0*
- *3GPP R2-1801701, RAN2 meeting #100*
- *3GPP R2-1801702, RAN2 meeting #AH-1801*
- *3GPP TS 38.300 V15.0.0*
- *3GPP TS 38.321, R2-1803854*